# EUROPEAN PATENT APPLICATION

(11) **EP 4 310 750 A1**
(43) Date of publication of application: **24.01.2024**
(21) Application number: 23181221.5
(22) Date of filing: 23.06.2023
(51) Int. Cl.: G06Q 10/10

(54) **CATALOG SERVICE REPLICATION**

(30) Priority: 18.07.2022 US 202217813085
(71) Applicant: Rockwell Automation Technologies, Inc., Mayfield Heights OH 44124 (US)
(72) Inventor: Jasper, Taryl J., Mayfield Heights, OH, 44124 (US); Rischar, Charles M., Mayfield Heights, OH, 44124 (US); DiBlasio, Anthony J., Mayfield Heights, OH, 44124 (US); Case, Clark L., Mayfield Heights, OH, 44124 (US)
(74) Representative: Grünecker Patent- und Rechtsanwälte PartG mbB

(57) **Abstract**

A centralized industrial catalog system aggregates product information from disparate sources and globally synchronizes updated catalog information to local versions of the product catalog at customer sites. The catalog system can execute as a service on a cloud platform accessible to end user applications or local catalogs. The catalog system serves as a scalable global authority for known product information for either a single product vendor or for multiple vendors. The industrial catalog system can ensure that local versions of product catalog content is synchronized with high-level sources.

## Description

### TECHNICAL FIELD

The subject matter disclosed herein relates generally to industrial automation systems, and, for example, to management of industrial product catalogs.

### BACKGROUND ART

Owners of industrial assets often reference electronic product catalogs containing information about the industrial devices and products that are currently available to be purchased from a vendor and integrated into the asset owner's industrial automation systems. Some types of industrial software also host and access local versions of product catalog information for various functions. For example, some industrial design platforms for developing industrial control projects - e.g.. industrial control programming, device configurations, etc. - may include an integrated library of device files representing specific industrial devices or modules, which can be selectively added to the control project being developed. Addition of these device files (e.g., electronic data sheet, or EDS, files) to a control project can assist in development of the control project by automatically generating device configurations or control programming for the represented device, or providing the developer with interfaces for setting the device's configuration parameters. According to another example, some types of business applications may be designed to provide industrial product distributers with information about a device vendor's current product offerings. To ensure that distributors are aware of newly released products, and to ensure that customers are not exposed to discontinued products, these business applications should be provided with the most current information about the vendor's product availability.

### BRIEF DESCRIPTION

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

In one or more embodiments, a system for synchronizing industrial catalog information is provided, comprising an indexing component configured to monitor a source of industrial product catalog information and, in response to detecting a change to the industrial product catalog information relating to an industrial product, index the change as a product record in a global catalog stored on a cloud platform, wherein the product record contains information about the industrial product; and a synchronization component configured to, in response to determining that the product record has been added or modified, identify an application or a client device that hosts a local version of the industrial product catalog information, synchronize the product record to the local version of the industrial catalog product information.

Also, one or more embodiments provide a method, comprising monitoring, by a system comprising a processor, a source of industrial product catalog information; in response to detecting, based on the monitoring, a change to the industrial product catalog information relating to an industrial product, indexing, by the system, the change as a product record in a global catalog stored on a cloud platform, wherein the product record contains information about the industrial product; and in response to determining that the product record has been added or modified: identifying, by the system, an application or a client device that hosts a local version of the industrial product catalog information; and synchronizing, by the system, the product record to the local version of the industrial catalog product information.

Also, according to one or more embodiments, a non-transitory computer-readable medium is provided having stored thereon instructions that, in response to execution, cause a system to perform operations, the operations comprising monitoring a source of industrial product catalog information; in response to detecting, based on the monitoring, a change to the industrial product catalog information relating to an industrial product, indexing the change as a product record in a global catalog stored on a cloud platform, wherein the product record contains information about the industrial product; and in response to determining that the product record has been added or modified: identifying an application or a client device that hosts a local version of the industrial product catalog information; and synchronizing, by the system, the product record to the local version of the industrial catalog product information.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a block diagram of an example industrial catalog system.
FIG. 3 is a diagram illustrating a generalized architecture of the industrial catalog system.
FIG. 4 is a diagram illustrating synchronization of product records to devices and applications at a customer location.
FIG. 5 is a diagram illustrating another example architecture in which catalog synchronization occurs across three levels of an industrial enterprise.
FIG. 6 is a block diagram of an example integrated development environment (IDE) system that includes a catalog synchronization component capable of synchronizing the IDE system's local device catalog with the global catalog.
FIG. 7 is a diagram illustrating a generalized architecture of the industrial IDE system.
FIG. 8 is a diagram illustrating several example automation object properties that can be leveraged by an IDE system in connection with building, deploying, and executing a system project.
FIG. 9 is a diagram illustrating example data flows associated with creation of a system project for an automation system being designed using an IDE system.
FIG. 10 is a diagram illustrating an example system project that incorporates automation objects into a project model.
FIG. 11 is a diagram illustrating commissioning of a system project.
FIG. 12 is a diagram illustrating an example architecture in which cloud-based IDE services are used to develop and deploy industrial applications to a plant environment.
FIG. 13 is a diagram illustrating configuration of device parameters using device profiles.
FIG. 14 is an example development interface that can be rendered on a client device by the industrial IDE system's user interface component.
FIG. 15 is a view of an explorer panel and its associated project tree in isolation.
FIG. 16 is a view of a main workspace area in which a Device Information editing window has been invoked for a selected device.
FIG. 17a is a view of the main workspace area in which a user has selected a 16-point digital input module.
FIG. 17b is a view of the main workspace area in which the Configuration category has been selected in the Category window.
FIG. 17c is a view of the main workspace area in which the Points category has been selected in the Category window.
FIG. 18a is a view of the main workspace area in which an 8-channel analog input module has been selected.
FIG. 18b is a view of the main workspace area depicting configuration parameters for an individual channel.
FIG. 18c is another view of the main workspace area depicting configuration parameters for an individual channel.
FIG. 19 is a diagram illustrating synchronization of product records to the device profile library of an instance of an industrial IDE system.
FIG. 20 is a flowchart of an example methodology for globally synchronizing industrial product catalog information to local instances of a product catalog.
FIG. 21 is an example computing environment.
FIG. 22 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives, an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context. the phrase "X employs A or B" is intended to mean any of the natural inclusive permutations. That is, the phrase "X employs A or B" is satisfied by any of the following instances: X employs 11; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

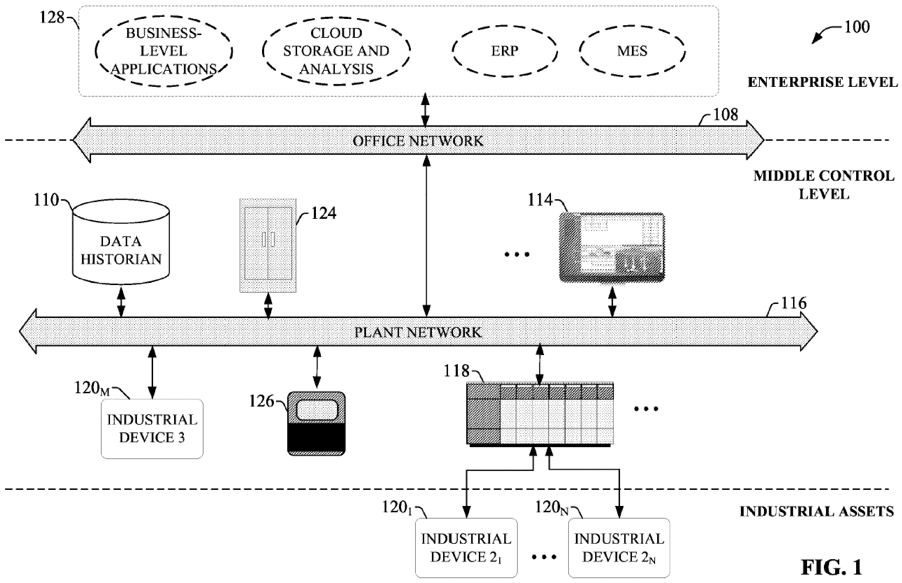

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise substantially any type of code capable of processing input signals read from the industrial devices 120 and controlling output signals generated by the industrial controllers 118, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, pumps, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with networked industrial devices 120_{M} over a network using, for example, a communication module or an integrated networking port. Exemplary networks can include the Internet, intranets, Ethernet, DeviceNet. ControlNet, Data Highway and Data Highway Plus (DH/DH+). Remote I/O, Fieldbus, Modbus, Profibus, wireless networks, serial protocols, and the like. The industrial controllers 118 can also store persisted data values that can be referenced by their associated control programs and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, a data historian 110 that aggregates and stores production information collected from the industrial controllers 118 or other data sources, motor control centers 124 that house motor control devices, motor drives such as variable frequency drives 126, vision systems, or other such systems.

Higher-level systems 128 may carry out functions that are less directly related to control of the industrial automation systems on the plant floor, and instead are directed to long term planning, high-level supervisory control, analytics, reporting, or other such high-level functions. These systems 128 may reside on the office network 108 at an external location relative to the plant facility, or on a cloud platform with access to the office and/or plant networks. Higher-level systems 128 may include, but are not limited to, cloud storage and analysis systems, big data analysis systems, manufacturing execution systems, data lakes, reporting systems, etc. In some scenarios, applications running at these higher levels of the enterprise may be configured to analyze control system operational data, and the results of this analysis may be fed back to an operator at the control system or directly to a controller 118 or device 120 in the control system.

Industrial asset owners often reference industrial product catalogs that detail the industrial devices and software products available from various vendors. These catalogs may organize product information according to product types (e.g., industrial controller, I/O module, HMI terminal, variable frequency drive, telemetry device, photosensor, etc.) and provide information about each available product, including but not limited to the model number and technical specifications (e.g., physical dimensions, capabilities, power consumption, available data ports, I/O point count, etc.).

Some types of applications also host local versions of product catalog information regarding the industrial devices and products that are available to be purchased and integrated into an asset owner's industrial automation systems. For example, some industrial design platforms for developing industrial control projects - e.g., industrial control programming, device configurations, etc. - may include an integrated library of device profiles representing specific industrial devices or modules, which can be selectively added to the control project being developed. Addition of these device profiles to a control project can assist in development of the control project by automatically generating device configurations or control programming for the represented device, or providing the developer with device-specific user interfaces for setting the device's configuration parameters.

According to another example, some types of business applications may be designed to provide industrial product distributers with information about a device vendor's current product offerings. To ensure that distributors are aware of newly released products, and to ensure that customers are not presented with information regarding discontinued products, these business applications should be provided with the most current information about the vendor's product availability.

Typically, when a device product catalog is updated to add newly released products or to remove discontinued products, applications with integrated local versions of these product catalogs must be updated in order to make the updated catalog information available to the users of those applications. This requires new versions of the application software containing snapshots of the current product offerings to be distributed and installed locally on the end user's systems. This approach necessitates effort on the part of end users to obtain and install updated catalogs on their systems, and can result in continued usage of outdated catalog information by end users who neglect to install these updated versions.

To address these and other issues, one or more embodiments described herein provide a centralized industrial catalog system that brings together product information from disparate sources and globally synchronizing updated catalog information to relevant applications at end user sites. In one or more embodiments, the catalog system can execute as a service on a cloud platform accessible to end user applications or local catalogs that execute a catalog API. The catalog system serves as a scalable global authority for known product information for either a single product vendor or for multiple vendors. Embodiments of the industrial catalog system can ensure that product catalog content is synchronized with high-level sources.

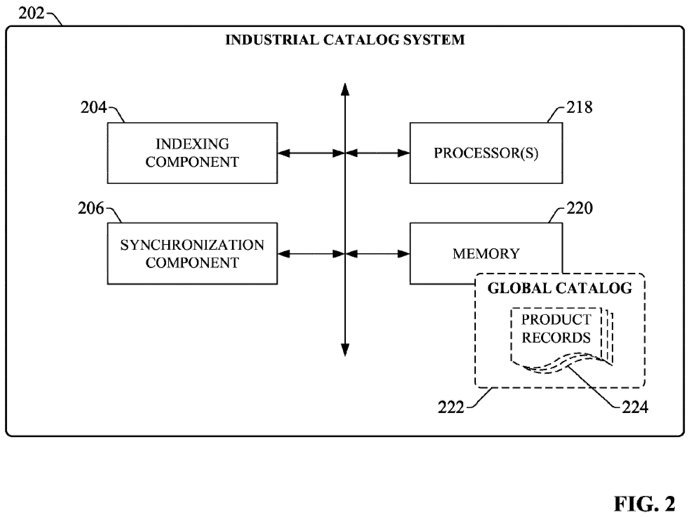

FIG. 2 is a block diagram of an example industrial catalog system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

Industrial catalog system 202 can include an indexing component 204, a synchronization component 206, one or more processors 218, and memory 220. In various embodiments, one or more of the indexing component 204, the synchronization component 206, the one or more processors 218, and memory 220 can be electrically and/or communicatively coupled to one another to perform one or more of the functions of the industrial catalog system 202. In some embodiments, components 204 and 206 can comprise software instructions stored on memory 220 and executed by processor(s) 218. Industrial catalog system 202 may also interact with other hardware and/or software components not depicted in FIG. 2. For example, processor(s) 218 may interact with one or more external user interface devices, such as a keyboard, a mouse, a display monitor, a touchscreen, or other such interface devices.

Indexing component 204 can be configured to obtain product information from external content stores using extensible indexing applications, and to index the product information in a global catalog 222 as product records 224. Synchronization component 206 can be configured to autonomously synchronize the product records 224 to on-premise catalog servers or applications that include integrated local versions of the catalog information.

The one or more processors 218 can perform one or more of the functions described herein with reference to the systems and/or methods disclosed. Memory 220 can be a computer-readable storage medium storing computer-executable instructions and/or information for performing the functions described herein with reference to the systems and/or methods disclosed.

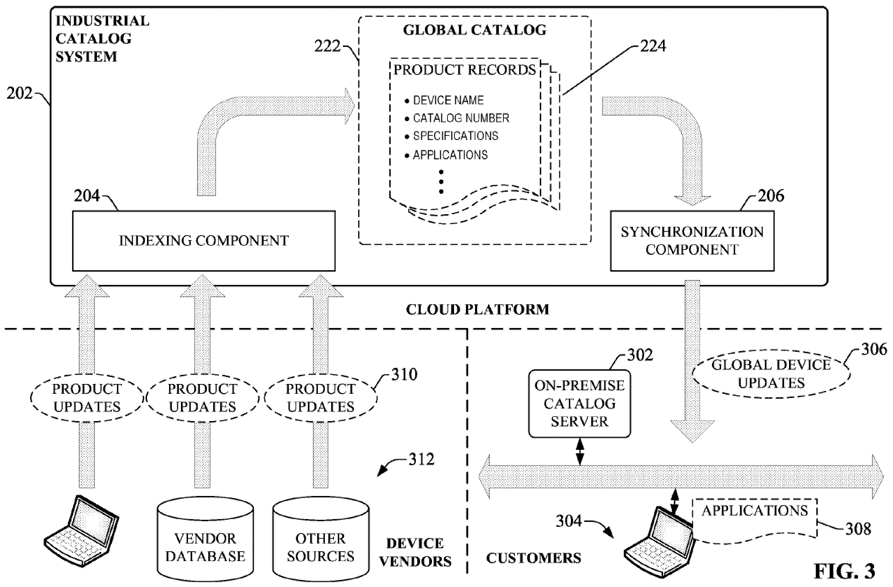

FIG. 3 is a diagram illustrating a generalized architecture of the industrial catalog system 202 according to one or more embodiments. In the illustrated embodiments, catalog system 202 resides and executes on a cloud platform or other secure centralized platform accessible to authorized vendors and end user applications. In some scenarios, the catalog system 202 can be hosted by a single product vendor for synchronization of product information from the vendor's parent catalog to on-premise applications that require access to the vendor's current catalog content. In other scenarios, the catalog system 202 can serve as a broader platform that allows multiple industrial product vendors to synchronize their product content to their customer's local catalogs.

The catalog system's indexing component 204 can collect and index product update information 310 from disparate sources 312 of product information associated with one or more product vendors and aggregate this information 310 in a global catalog 222 as an authoritative set of product information known to be available from the vendors. The sources 312 of product update information 310 can reside at various locations accessible to the indexing component 204, including but not limited to the vendors' on-premise servers, cloud-based or web-based catalog databases, or other such locations.

In some embodiments, the indexing capability of the indexing component 204 can be extensible to the sources 312 of product content. For example, in some embodiments the indexing component 204 can deploy a custom plug-in indexing application to each source 312 of product content and coordinate with these local indexing applications to discover and obtain updates to the product information contained in the content source 312. Some aspects of the indexing functionality can be customizable to allow vendors a degree of control over publication of their product content; e.g., by allowing vendors to specify, to the plug-in indexing application, types of product content or a granularity of product content permitted to be published by the indexing schema. In cases in which a given product attribute exists in multiple different sources 312 of product content, vendors may also assign index priority to a specified content source 312 to be used to update the product attribute.

For each source 312 of product content, the indexing component 204 can use a custom indexing application capable of scanning and publishing the type of product content stored on that source 312. The indexing application used to scan a given source 312 may be a function of the format of the product data contained on the source 312. Example types of industrial product data which can be indexed by the catalog system 202 can include, but are not limited to, electronic data sheet (EDS) files corresponding to respective industrial devices, device profiles, device type modules, electronic document delivery (EDD) files, spreadsheet files or word processing documents containing product information, portable document format (PDF) files, or other such data types or file types.

The indexing component 204 can be configured to scan participating product content sources 312 for updates to vendors' product catalog information. When a vendor updates product information contained in one of their product content sources 312 - e.g., to add a new product, edit technical specifications for an existing product, or remove an unavailable product from their catalog - the indexing component 204, working in collaboration with the local indexing applications executing on those sources 312 if appropriate, retrieves product update information 310 documenting the changes made to the catalog data and indexes the update information 310 in the global catalog 222.

In some embodiments, the global catalog 222 can maintain current product information in the form of product records 224 containing information about respective different industrial products. Products having product records 224 indexed in the global catalog 222 can include both hardware products and software products. Information contained in a product record 222 for a given industrial product can include, but is not limited to, a name and catalog number of the product, the product's technical specifications (e.g., capabilities, physical dimensions, I/O point count. storage capacity, processing capacity, power requirements, etc.), current firmware version, other devices with which the product is compatible, supported networks or communication protocols, or other such product attributes. In response to discovering that information for a new product has been added to a content source 312, the indexing component 204 retrieves, from the source 312, corresponding product update information 310 containing information about the new product, and generates a new product record 222 in the global catalog 222 based the product update information 310. In response to detecting a removal of a product from a content source 312, indexing component 204 can delete the corresponding product record 224 from the global catalog 222. If product update information 310 indicates a modification to a product that already has a corresponding product record 224 in the global catalog 222, the indexing component 204 locates and edits the corresponding product record 2224 to reflect the modification to the product.

In some scenarios, information about a given product may reside on multiple different content sources 312. For example, product information may be duplicated across different content sources 312 of the same type, or in different formats across content sources 312 supporting different data formats. Moreover, the distributed information for a given product may relate to different properties or attributes of the product. Indexing component 204 can be configured to recognize scenarios in which product information stored on different content sources 312 corresponds to the same product e.g., based on a common product name or model number associated with the different sets of product data - and in response to detecting changes to any of the multiple sets of data, apply those changes to the same product record 224.

If conflicts between values of a product's attribute exist between two different sources 312 of information for the product, the indexing component 204 can apply any suitable conflict resolution criteria to determine how the attribute should be updated in the corresponding product record 224. In some embodiments, the indexing component 204 can allow a vendor to specify which source 312 of content for a given product or product attribute is to be given priority for current values of the product or product attribute, such that the indexing component 204 will only use information contained on the prioritized source 312 to update the product record 224 i f such conflicts are discovered. In general, the indexing component 204 can use any suitable technique to aggregate information about an industrial product stored in disparate sources 312 into a common product record 224 for the product.

In some embodiments, the indexing component 204 can perform integrity checks on the content of the global catalog 222 to verify that the product records 224 have not been improperly modified by unauthorized entities. Trust relationships between the content sources 312 and the catalog system 202 can also prevent unauthorized modifications to the product records 224 by rogue synchronization to the catalog catalog 222.

The global catalog 222 acts as a captive data store for the product records 224 and is responsive to queries directed to the collection of product records 224. In some embodiments, the catalog system 202 can store the product records 224 in a segregated manner according to vendor, so that synchronization of product information to end user applications 308 or other consumers of the catalog information is performed separately for the different vendors.

The catalog system's synchronization component 206 is configured to synchronize the product records 224 to end user applications, servers, or other consumers of the catalog data. The example depicted in FIG. 3 illustrates a single customer facility receiving global device updates 306 from the catalog system 202. The synchronization component 206 can be configured to send global device updates 306 to substantially any type of local host of industrial product catalog information, including but not limited to on-premise catalog servers 302 that store local caches of vendor product information for local viewing, or applications 308 that use local device libraries in connection with their functions (e.g., industrial development platforms or IDE systems that allow users to selectively add device profiles to a control system project). The global device updates 306 synchronize the local product information stored on those hosts with the product records 224 stored in the global catalog 222.

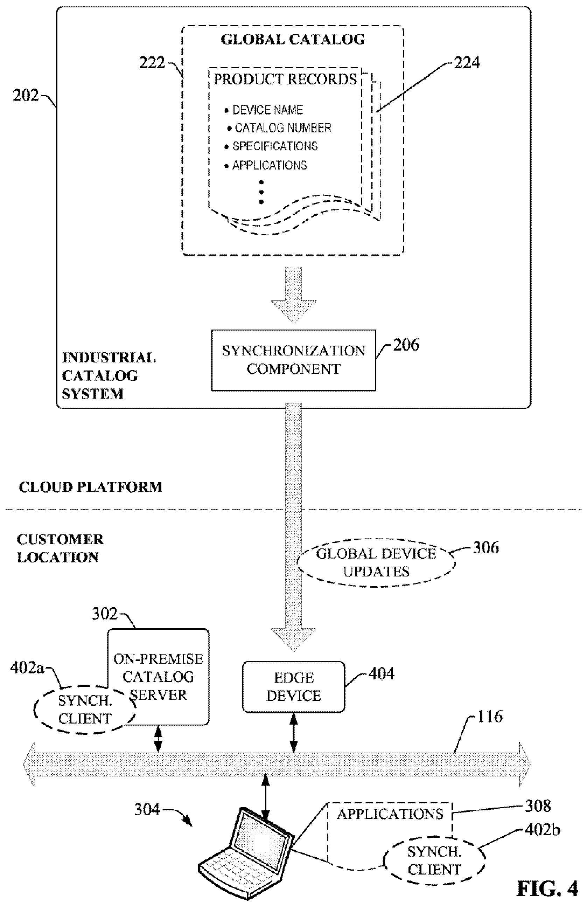

FIG. 4 is a diagram illustrating synchronization of product records to devices and applications at a customer location. In this example, a customer at a plant facility has multiple local versions of a vendor's catalog data, including a version that resides on an on-premise catalog server 302 used for reference purposes as well as a version integrated in an application 308 executing on a client device 304 (e.g., an industrial control project development or IDE application, as will be described in more detail below). In some implementations, local instances of a vendor's catalog can include synchronization clients 402 that coordinate with the synchronization component 206 to keep the local versions of the catalog synchronized with the product records 224 maintained in the global catalog 222. The synchronization clients 402 serve as APIs that permit the local catalog instances to receive global device updates 306 from the global catalog 222. The synchronization component 206 acts as a synchronization server for the local synchronization clients 402, pushing relevant updates 306 to the synchronization clients 402 which then update their associated local catalog instances in accordance with the updates 306.

In the example illustrated in FIG. 4, the devices and applications that host the local catalog instances - e.g., catalog server 302 and application 308 - communicate with the catalog system 202 via an edge device 404, which interfaces the plant network 116 with the cloud platform on which the catalog system 202 resides. However, other architectures or communication channels can be used to establish communication between local catalog instances and the cloud-based catalog system 202.

In general, the selection of global catalog content to be synchronized to a given local catalog instance can depend on the product vendors whose products are represented in the local catalog instances. In an example scenario, when a product update 310 for product associated with a given vendor is indexed into the global catalog 222 by the indexing component 204, the synchronization component 206 can determine which synchronization clients 402 are associated with local catalog instances that include products provided by that vendor, and send global device updates 306 reflecting the product update to those synchronization clients 402. In some embodiments, the synchronization clients 402 can also render notifications of catalog updates on the target applications. These notifications can summarize additions, deletions, or modifications that were applied to synchronize the local instance of the catalog with the global catalog 222.

In some embodiments, the catalog system 202 can also grant users a degree of control over the type or amount of global catalog content to be synchronized to their local catalog instances. To this end, synchronization clients 402 can be configured to generate user interfaces that allow users to define local administrative policies that specify which products, product types, or product attributes are to be synchronized to their local catalog instance from the global catalog 222. For example, a user can define an administrative policy specifying a subset of available products that are to be excluded from the synchronization process if the customer does not intend to use those products (or, alternatively, the user can positively specify an exclusive subset of products that are to be synchronized). Administrative policies could also be defined that specify a selected subset of product attributes that are to be synchronized exclusively, such that other product attributes are excluded from the synchronization process. In this way, global catalog content can be synchronized to local instances of the catalogs autonomously, while being constrained by local administrative preferences and policies.

Some embodiments of the catalog system 202 can allow vendors to tag selected product records 224 as representing licensed products that are only to be made available to customers having valid licenses to use the corresponding product. In such embodiments, the synchronization component 206 will only permit synchronization of those product records 224 to local catalog instances if the client devices or servers hosting the local catalogs provide a valid license to use the corresponding products.

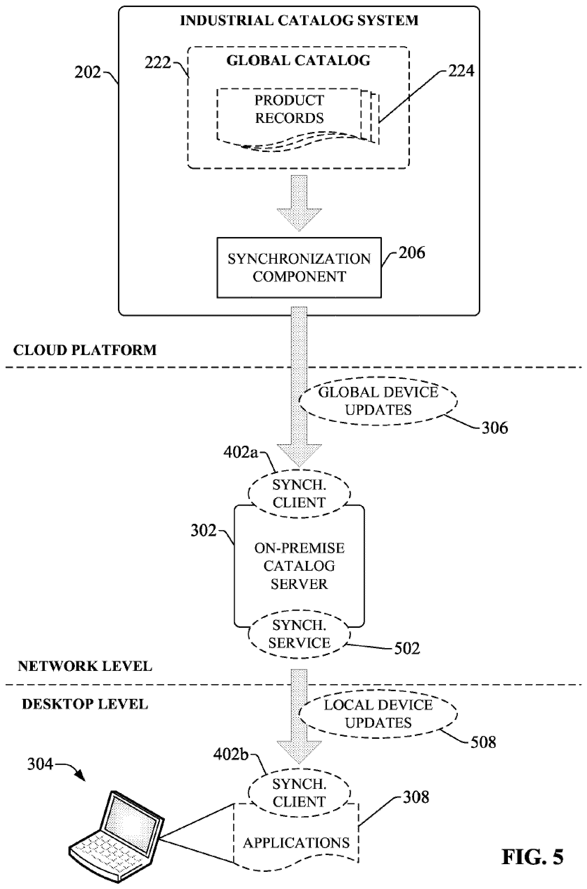

FIG. 5 is a diagram illustrating another example architecture in which catalog synchronization is performed across three levels of an industrial enterprise. In this example, the synchronization component 206 of the catalog system 202 synchronizes global device updates 306 from the global catalog 224 to a device residing on the network level of the industrial enterprise; in this case, the on-premise catalog server 302, which executes a synchronization client 402a. The network-level catalog server 302 can then use a local synchronization service 502 to propagate the updates 508 to client-level (or desktop-level) devices that host their own local instances of the catalog, such as client device 304 executing application 308. In general, each synchronization clients 402 serves as a common API that allows its host device to communicate with, and receive updates from, any version of the catalog, regardless of whether the catalog is a cloud-based or network-based version. Each synchronization client 402 can execute a background replication protocol with the synchronization component 206 that keeps the synchronization client's host device or application synchronized with the higher-level cloud-based version of the catalog 222 (or relevant subsets of the product records 224 stored in the global catalog 222).

In scenarios in which a network gap exists between the global catalog 222 and a local version of the product catalog, an administrator at a customer facility can copy the local device updates 508 to a storage device, such as a thumb drive or flash drive, and apply the updates to the local product catalog from these stored updates 508.

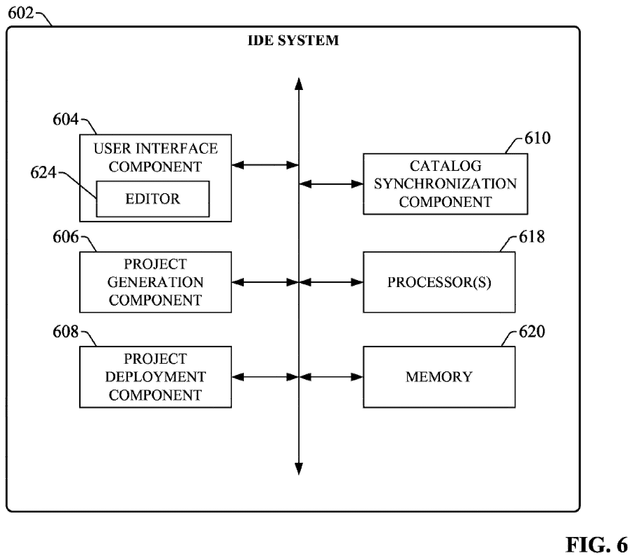

As noted above, the industrial catalog system 202 can be used to synchronize local versions of a device catalog hosted on industrial IDE applications used to develop industrial control projects. FIG. 6 is a block diagram of an example integrated development environment (IDE) system 202 that includes a catalog synchronization component 210 capable of synchronizing the IDE system's local device catalog with the global catalog 222 according to one or more embodiments of this disclosure.

IDE system 602 can include a user interface component 604 including an IDE editor 624. a project generation component 606, a project deployment component 608, a catalog synchronization component 610 one or more processors 618, and memory 620. In various embodiments, one or more of the user interface component 604, project generation component 606, project deployment component 608. catalog synchronization component 610, the one or more processors 618, and memory 620 can be electrically and/or communicatively coupled to one another to perform one or more of the functions of the IDE system 602. In some embodiments, components 604, 606, 608, and 610 can comprise software instructions stored on memory 620 and executed by processor(s) 618. IDE system 602 may also interact with other hardware and/or software components not depicted in FIG. 6. For example, processor(s) 618 may interact with one or more external user interface devices, such as a keyboard, a mouse, a display monitor, a touchscreen, or other such interface devices.

User interface component 604 can be configured to receive user input and to render output to the user in any suitable format (e.g., visual, audio, tactile, etc.). In some embodiments, user interface component 604 can be configured to communicatively interface with an IDE client that executes on a client device (e.g., a laptop computer, tablet computer, smart phone, etc.) that is communicatively connected to the IDE system 602 (e.g., via a hardwired or wireless connection). The user interface component 604 can then receive user input data and render output data via the IDE client. In other embodiments, user interface component 604 can be configured to generate and serve suitable interface screens to a client device (e.g., program development screens), and exchange data via these interface screens. Input data that can be received via various embodiments of user interface component 604 can include, but is not limited to, programming code, industrial design specifications or goals, engineering drawings, AR/VR input, DSL definitions, video or image data, device configuration data, device profile definition data, or other such input. Output data rendered by various embodiments of user interface component 604 can include program code, programming feedback (e.g., error and highlighting, coding suggestions, etc.), programming and visualization development screens, project testing results, etc.

Project generation component 606 can be configured to create a system project comprising one or more project files based on design input received via the user interface component 604, as well as industrial knowledge, predefined code modules and visualizations, and automation objects maintained by the IDE system 602. Project deployment component 608 can be configured to commission the system project created by the project generation component 606 to appropriate industrial devices (e.g., controllers, HMI terminals, motor drives, AR/VR systems, etc.) for execution. To this end, project deployment component 608 can identify the appropriate target devices to which respective portions of the system project should be sent for execution, translate these respective portions to formats understandable by the target devices, and deploy the translated project components to their corresponding devices.

The one or more processors 618 can perform one or more of the functions described herein with reference to the systems and/or methods disclosed. Memory 620 can be a computer-readable storage medium storing computer-executable instructions and/or information for performing the functions described herein with reference to the systems and/or methods disclosed

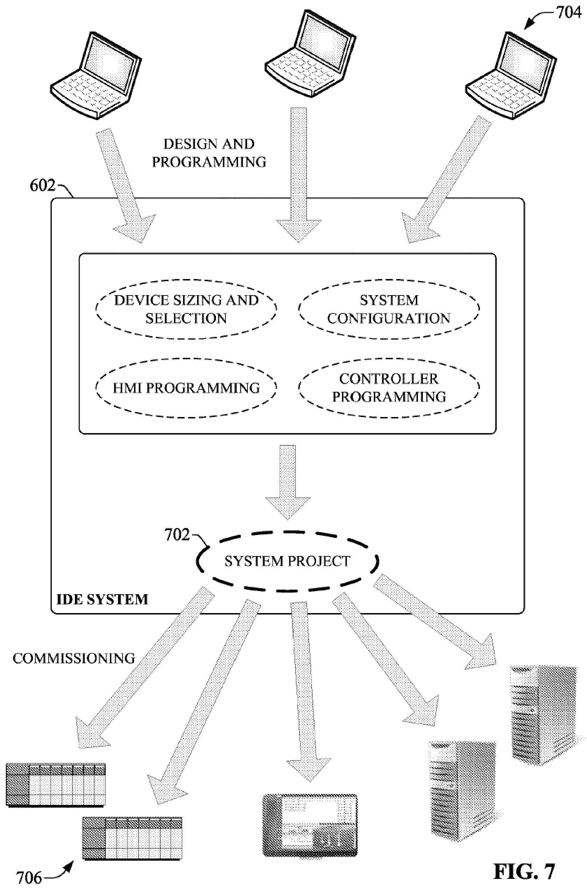

FIG. 7 is a diagram illustrating a generalized architecture of the industrial IDE system 602 according to one or more embodiments. Industrial IDE system 602 can implement a common set of services and workflows spanning not only design, but also commissioning, operation, and maintenance. In terms of design, the IDE system 602 can support not only industrial controller programming and HMI development, but also sizing and selection of system components, device/system configuration, AR/VR visualizations, and other features. The IDE system 602 can also include tools that simplify and automate commissioning of the resulting project and assist with subsequent administration of the deployed system during runtime.

Embodiments of the IDE system 602 that are implemented on a cloud platform also facilitate collaborative project development whereby multiple developers 704 contribute design and programming input to a common automation system project 702. Collaborative tools supported by the IDE system can manage design contributions from the multiple contributors and perform version control of the aggregate system project 702 to ensure project consistency.

Based on design and programming input from one or more developers 704, IDE system 602 generates a system project 702 comprising one or more project files. The system project 702 encodes one or more of control programming; HMI, AR, and/or VR visualizations; device or sub-system configuration data (e.g., drive parameters, vision system configurations, telemetry device parameters, safety zone definitions, etc.); or other such aspects of an industrial automation system being designed. IDE system 602 can identify the appropriate target devices 706 on which respective aspects of the system project 702 should be executed (e.g.. industrial controllers, HMI terminals, variable frequency drives, safety devices, etc.), translate the system project 702 to executable files that can be executed on the respective target devices, and deploy the executable files to their corresponding target devices 706 for execution, thereby commissioning the system project 702 to the plant floor for implementation of the automation project.

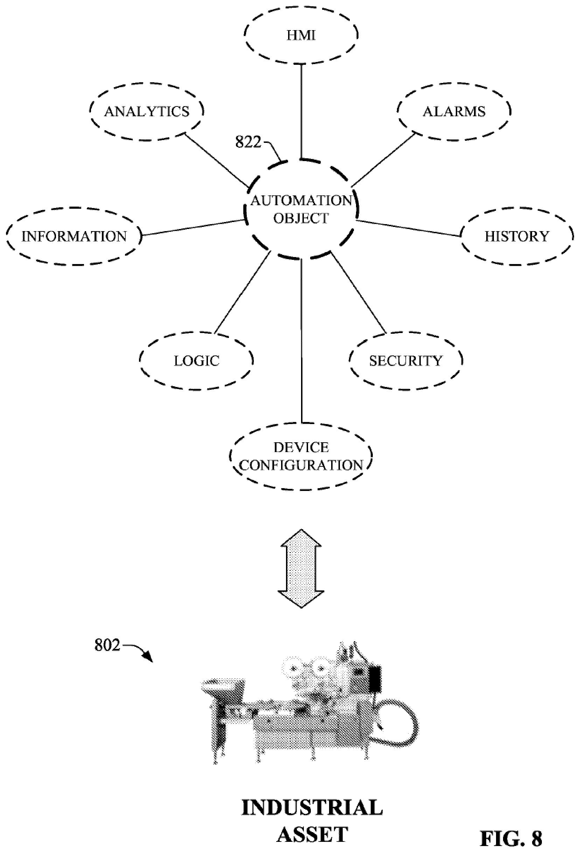

To support enhanced development capabilities, some embodiments of IDE system 602 can be built on an object-based data model rather than, or in addition to, a tag-based architecture. Automation objects 822 serve as the building block for this object-based development architecture. FIG. 8 is a diagram illustrating several example automation object properties that can be leveraged by the IDE system 602 in connection with building, deploying, and executing a system project 702. Automation objects 822 can be created and augmented during design, integrated into larger data models, and consumed during runtime. These automation objects 822 provide a common data structure across the IDE system 602 and can be stored in an object library (e.g., part of memory 620) for reuse. The object library can store predefined automation objects 822 representing various classifications of real-world industrial assets 802, including but not limited to pumps, tanks, values, motors, motor drives (e.g., variable frequency drives), industrial robots, actuators (e.g., pneumatic or hydraulic actuators), or other such assets. Automation objects 822 can represent elements at substantially any level of an industrial enterprise, including individual devices, machines made up of many industrial devices and components (some of which may be associated with their own automation objects 822), and entire production lines or process control systems.

An automation object 822 for a given type of industrial asset can encode such aspects as 2D or 3D visualizations, alarms, control coding (e.g., logic or other type of control programming), analytics, startup procedures, testing protocols and scripts, validation reports, simulations, schematics, security protocols, and other such properties associated with the industrial asset 802 represented by the object 822. As will be described in more detail herein, an automation object 822 can also store device configuration settings for an industrial device as a sequence of mouse and keystroke interactions with a device profile configuration interface, such that these interactions can be played back to facilitate reproducing the device configuration for another device. Automation objects 822 can also be geotagged with location information identifying the location of the associated asset. During runtime of the system project 702, the automation object 822 corresponding to a given real-world asset 802 can also record status or operational history data for the asset. In general, automation objects 822 serve as programmatic representations of their corresponding industrial assets 802, and can be incorporated into a system project 702 as elements of control code, a 2D or 3D visualization, a knowledgebase or maintenance guidance system for the industrial assets, or other such aspects.

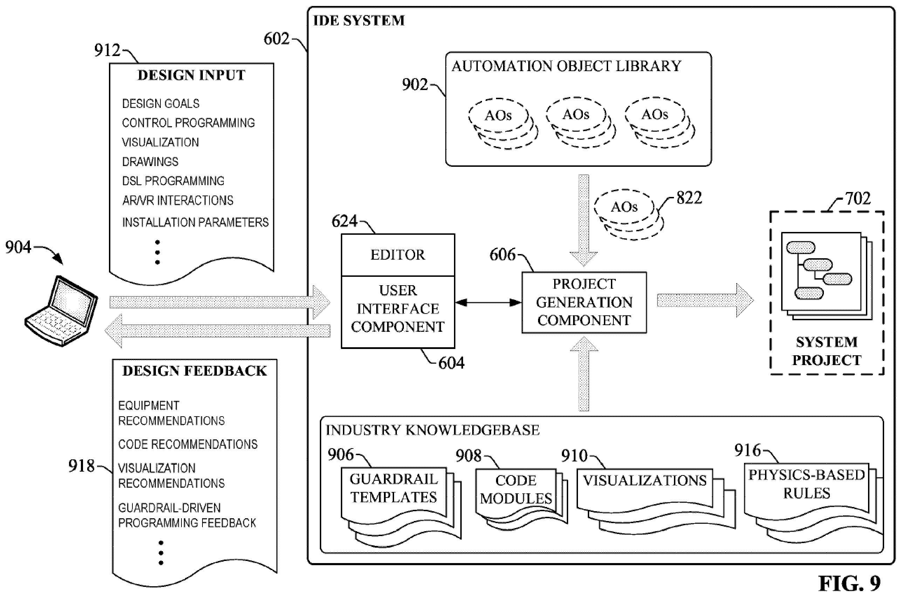

FIG. 9 is a diagram illustrating example data flows associated with creation of a system project 702 for an automation system being designed using IDE system 602 according to one or more embodiments. A client device 904 (e.g., a laptop computer, tablet computer, desktop computer, mobile device, wearable AR/VR appliance, etc.) having suitable access privileges can access the IDE system's project development tools and leverage these tools to create a comprehensive system project 702 for an automation system being developed. Through interaction with the system's user interface component 604, developers can submit design input 912 to the IDE system 602 in various supported formats, including industry-specific control programming (e.g., control logic, structured text, sequential function charts, etc.) and HMT screen configuration input. Based on this design input 912 and information stored in an industry knowledgebase (predefined code modules 908 and visualizations 910, guardrail templates 906, physics-based rules 916, etc.), user interface component 604 renders design feedback 918 designed to assist the developer in connection with developing a system project 702 for configuration, control, and visualization of an industrial automation system.

In addition to control programming and visualization definitions, some embodiments of IDE system 602 can be configured to receive digital engineering drawings (e.g., computer-aided design (CAD) files) as design input 912. In such embodiments, project generation component 606 can generate portions of the system project 702 - e.g., by automatically generating control and/or visualization code - based on analysis of existing design drawings. Drawings that can be submitted as design input 912 can include, but are not limited to, P&1D drawings, mechanical drawings, flow diagrams, or other such documents. For example, a P&ID drawing can be imported into the IDE system 602. and project generation component 606 can identify elements (e.g., tanks, pumps, etc.) and relationships therebetween conveyed by the drawings. Project generation component 606 can associate or map elements identified in the drawings with appropriate automation objects 822 corresponding to these elements (e.g., tanks, pumps, etc.) and add these automation objects 822 to the system project 702. The device-specific and asset-specific automation objects 822 include suitable code and visualizations to be associated with the elements identified in the drawings. In general, the IDE system 602 can examine one or more different types of drawings (mechanical, electrical, piping, etc.) to determine relationships between devices, machines, and/or assets (including identifying common elements across different drawings) and intelligently associate these elements with appropriate automation objects 822, code modules 908, and/or visualizations 910. The IDE system 602 can leverage physics-based rules 916 as well as pre-defined code modules 908 and visualizations 910 as necessary in connection with generating code or project data for system project 702.

Also, or in addition, some embodiments of IDE system 602 can support goal-based automated programming. For example, the user interface component 604 can allow the user to specify production goals for an automation system being designed (e.g., specifying that a bottling plant being designed must be capable of producing at least 5000 bottles per second during normal operation) and any other relevant design constraints applied to the design project (e.g., budget limitations, available floor space, available control cabinet space, etc.). Based on this information, the project generation component 606 will generate portions of the system project 702 to satisfy the specified design goals and constraints. Portions of the system project 702 that can be generated in this manner can include, but are not limited to, device and equipment selections (e.g., definitions of how many pumps, controllers, stations, conveyors, drives, or other assets will be needed to satisfy the specified goal), associated device configurations (e.g., tuning parameters, network settings, drive parameters, etc.), control coding, or HMI screens suitable for visualizing the automation system being designed.

Some embodiments of the project generation component 606 can also generate at least some of the project code for system project 702 based on knowledge of parts that have been ordered for the project being developed. This can involve accessing the customer's account information maintained by an equipment vendor to identify devices that have been purchased for the project. Based on this information the project generation component 606 can add appropriate automation objects 822 and associated code modules 908 corresponding to the purchased assets, thereby providing a starting point for project development.

In some embodiments, IDE system 602 can also store and implement guardrail templates 906 that define design guardrails intended to ensure the project's compliance with internal or external design standards. Based on design parameters defined by one or more selected guardrail templates 906, user interface component 604 can provide, as a subset of design feedback 918, dynamic recommendations or other types of feedback designed to guide the developer in a manner that ensures compliance of the system project 702 with internal or external requirements or standards (e.g., certifications such as TUV certification, in-house design standards, industry-specific or vertical-specific design standards, etc.). This feedback 918 can take the form of text-based recommendations (e.g., recommendations to rewrite an indicated portion of control code to comply with a defined programming standard), syntax highlighting, error highlighting, auto-completion of code snippets, or other such formats. In this way, IDE system 602 can customize design feedback 918 - including programming recommendations, recommendations of predefined code modules 908 or visualizations 910, error and syntax highlighting, etc. - in accordance with the type of industrial system being developed and any applicable in-house design standards.

Guardrail templates 906 can also be designed to maintain compliance with global best practices applicable to control programming or other aspects of project development. For example, user interface component 604 may generate and render an alert if a developer's control programing is deemed to be too complex as defined by criteria specified by one or more guardrail templates 906. Since different verticals (e.g., automotive, pharmaceutical, oil and gas, food and drug, marine, etc.) must adhere to different standards and certifications, the IDE system 602 can maintain a library of guardrail templates 906 for different internal and external standards and certifications, including customized user-specific guardrail templates 906. These guardrail templates 906 can be classified according to industrial vertical, type of industrial application, plant facility (in the case of custom in-house guardrail templates 906) or other such categories. During development, project generation component 606 can select and apply a subset of guardrail templates 906 determined to be relevant to the project currently being developed, based on a determination of such aspects as the industrial vertical to which the project relates, the type of industrial application being programmed (e.g., flow control, web tension control, a certain batch process, etc.), or other such aspects. Project generation component 606 can leverage guardrail templates 906 to implement rules-based programming, whereby programming feedback (a subset of design feedback 918) such as dynamic intelligent autocorrection, type-aheads, or coding suggestions are rendered based on encoded industry expertise and best practices (e.g., identifying inefficiencies in code being developed and recommending appropriate corrections).

Users can also run their own internal guardrail templates 906 against code provided by outside vendors (e.g., OEMs) to ensure that this code complies with in-house programming standards. In such scenarios, vendor-provided code can be submitted to the IDE system 602, and project generation component 606 can analyze this code in view of in-house coding standards specified by one or more custom guardrail templates 906. Based on results of this analysis, user interface component 604 can indicate portions of the vendor-provided code (e.g., using highlights, overlaid text, etc.) that do not conform to the programming standards set forth by the guardrail templates 906, and display suggestions for modifying the code in order to bring the code into compliance. As an alternative or in addition to recommending these modifications, some embodiments of project generation component 606 can be configured to automatically modify the code in accordance with the recommendations to bring the code into conformance.

In making coding suggestions as part of design feedback 918, project generation component 606 can invoke selected code modules 908 stored in a code module database or selected automation objects 822 stored in an automation object library 902 (e.g., on memory 620). Code modules 908 comprise standardized coding segments for controlling common industrial tasks or applications (e.g., palletizing, flow control, web tension control, pick-and-place applications, conveyor control, etc.). Similarly, automation objects 822 representing respective industrial assets may have associated therewith standardize control code for monitoring and controlling their respective assets. In some embodiments, code modules 908 and/or automation objects 822 can be categorized according to one or more of an industrial vertical (e.g., automotive, food and drug, oil and gas, textiles, marine, pharmaceutical, etc.), an industrial application, or a type of machine or device to which the code module 908 or automation object 822 is applicable.

In some embodiments, project generation component 606 can infer a programmer's current programming task or design goal based on programmatic input being provided by the programmer (as a subset of design input 912), and determine, based on this task or goal, whether one of the pre-defined code modules 908 or automation objects 822 may be appropriately added to the control program being developed to achieve the inferred task or goal. For example, project generation component 606 may infer, based on analysis of design input 912, that the programmer is currently developing control code for transferring material from a first tank to another tank, and in response, recommend inclusion of a predefined code module 908 comprising standardized or frequently utilized code for controlling the valves, pumps, or other assets necessary to achieve the material transfer. Similarly, the project generation component 606 may recommend inclusion of an automation object 822 representing one of the tanks, or one of the other industrial assets involved in transferring the material (e.g., a valve, a pump, etc.), where the recommended automation object 822 includes associated control code for controlling its associated asset as well as a visualization object that can be used to visualize the asset on an HMI application or another visualization application.

Customized guardrail templates 906 can also be defined to capture nuances of a customer site that should be taken into consideration in the project design. For example, a guardrail template 906 could record the fact that the automation system being designed will be installed in a region where power outages are common, and will factor this consideration when generating design feedback 918; e.g., by recommending implementation of backup unintcrruptable power supplies and suggesting how these should be incorporated, as well as recommending associated programming or control strategies that take these outages into account.

IDE system 602 can also use guardrail templates 906 to guide user selection of equipment or devices for a given design goal; e.g., based on the industrial vertical, type of control application (e.g., sheet metal stamping, die casting, palletization, conveyor control, web tension control, batch processing, etc.), budgetary constraints for the project, physical constraints at the installation site (e.g., available floor, wall or cabinet space; dimensions of the installation space; etc.), equipment already existing at the site, etc. Some or all of these parameters and constraints can be provided as design input 912, and user interface component 604 can render the equipment recommendations as a subset of design feedback 918. In conjunction with this equipment recommendation, the project generation component 606 can also recommend inclusion of corresponding automation objects 822 representing the recommended equipment for inclusion in the system project 702.

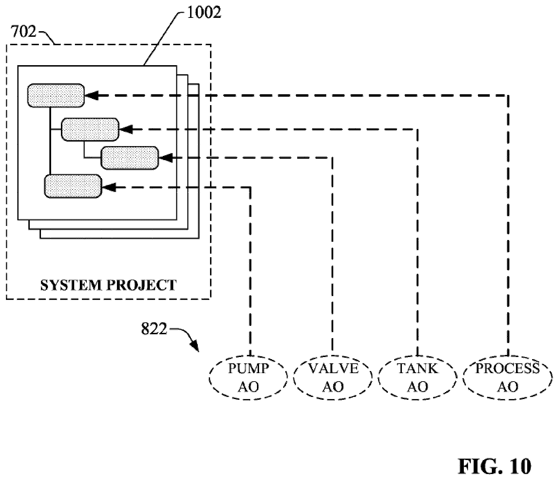

As noted above, the system project 702 generated by IDE system 602 for a given automaton system being designed can be built upon an object-based architecture that uses automation objects 822 as building blocks. FIG. 10 is a diagram illustrating an example system project 702 that incorporates automation objects 822 into the project model. In this example, various automation objects 822 representing analogous industrial devices, systems, or assets of an automation system (e.g., a process, tanks, valves, pumps, etc.) have been incorporated into system project 702 as elements of a larger project data model 1002. The project data model 1002 also defines hierarchical relationships between these automation objects 822. According to an example relationship, a process automation object representing a batch process may be defined as a parent object to a number of child objects representing devices and equipment that carry out the process, such as tanks, pumps, and valves. Each automation object 822 has associated therewith object properties or attributes specific to its corresponding industrial asset (e.g., those discussed above in connection with FIG. 8), including executable control programming for controlling the asset (or for coordinating the actions of the asset with other industrial assets) and visualizations that can be used to render relevant information about the asset during runtime.

At least some of the attributes of each automation object 822 are default properties defined by the IDE system 602 based on encoded industry expertise pertaining to the asset represented by the objects. These default properties can include, for example, industry-standard or recommended control code for monitoring and controlling the asset represented by the automation object 822, a 2D or 3D graphical object that can be used to visualize operational or statistical data for the asset, alarm conditions associated with the asset, analytic or reporting scripts designed to yield actionable insights into the asset's behavior, or other such properties. Other properties can be modified or added by the developer as needed (via design input 912) to customize the automation object 822 for the particular asset and/or industrial application for which the system projects 702 is being developed. This can include, for example, associating customized control code, HMI screens, AR presentations, or help files associated with selected automation objects 822. In this way, automation objects 822 can be created and augmented as needed during design for consumption or execution by target control devices during runtime.

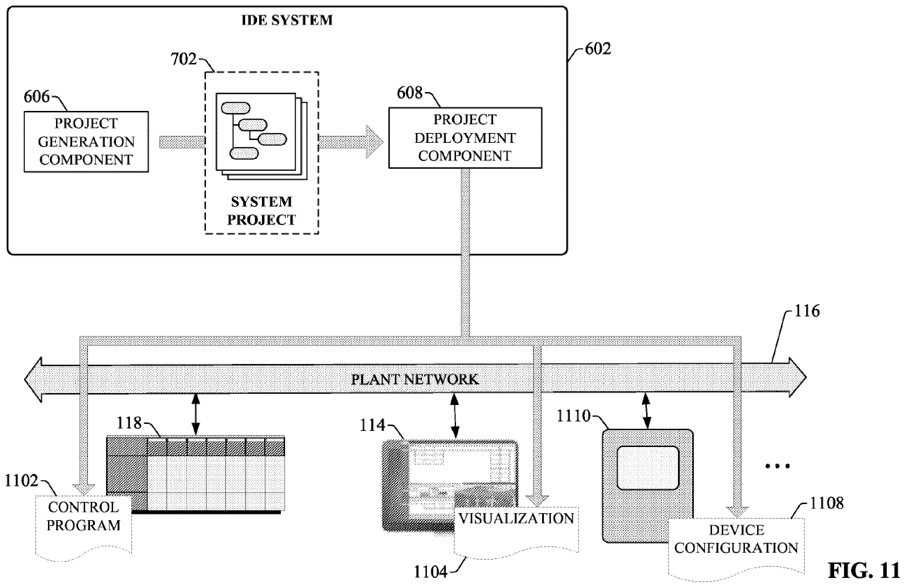

Once development and testing on a system project 702 has been completed, commissioning tools supported by the IDE system 602 can simplify the process of commissioning the project in the field. When the system project 702 for a given automation system has been completed, the system project 702 can be deployed to one or more target control devices for execution. FIG. 11 is a diagram illustrating commissioning of a system project 702. Project deployment component 608 can compile or otherwise translate a completed system project 702 into one or more executable files or configuration files that can be stored and executed on respective target industrial devices of the automation system (e.g., industrial controllers 118, HMI terminals 114 or other types of visualization systems, motor drives 1110, telemetry devices, vision systems, safety relays, etc.).

Conventional control program development platforms require the developer to specify the type of industrial controller (e.g., the controller's model number) on which the control program will run prior to development, thereby binding the control programming to a specified controller. Controller specific guardrails are then enforced during program development which limit how the program is developed given the capabilities of the selected controller. By contrast, some embodiments of the IDE system 602 can abstract project development from the specific controller type, allowing the designer to develop the system project 702 as a logical representation of the automation system in a manner that is agnostic to where and how the various control aspects of system project 702 will run. Once project development is complete and system project 702 is ready for commissioning, the user can specify (via user interface component 604) target devices on which respective aspects of the system project 702 are to be executed. In response, an allocation engine of the project deployment component 608 will translate aspects of the system project 702 to respective executable files formatted for storage and execution on their respective target devices.

For example, system project 702 may include - among other project aspects - control code, visualization screen definitions, and motor drive parameter definitions. Upon completion of project development, a user can identify which target devices- including an industrial controller 118, an HMI terminal 114, and a motor drive 1110 - are to execute or receive these respective aspects of the system project 702. Project deployment component 608 can then translate the controller code defined by the system project 702 to a control program file 1102 formatted for execution on the specified industrial controller 118 and send this control program file 1102 to the controller 118 (e.g., via plant network 116). Similarly, project deployment component 608 can translate the visualization definitions and motor drive parameter definitions to a visualization application 1104 and a device configuration file 708. respectively, and deploy these files to their respective target devices for execution and/or device configuration.

In general, project deployment component 608 performs any conversions necessary to allow aspects of system project 702 to execute on the specified devices. Any inherent relationships, handshakes, or data sharing defined in the system project 702 are maintained regardless of how the various elements of the system project 702 are distributed. In this way, embodiments of the IDE system 602 can decouple the project from how and where the project is to be run. This also allows the same system project 702 to be commissioned at different plant facilities having different sets of control equipment. That is, some embodiments of the IDE system 602 can allocate project code to different target devices as a function of the particular devices found on-site. IDE system 602 can also allow some portions of the project file to be commissioned as an emulator or on a cloud-based controller.

As an alternative to having the user specify the target control devices to which the system project 702 is to be deployed, some embodiments of IDE system 602 can actively connect to the plant network 116 and discover available devices, ascertain the control hardware architecture present on the plant floor, infer appropriate target devices for respective executable aspects of system project 702, and deploy the system project 702 to these selected target devices. As part of this commissioning process, IDE system 602 can also connect to remote knowledgebases (e.g., web-based or cloud-based knowledgebases) to determine which discovered devices are out of date or require firmware upgrade to properly execute the system project 702. In this way, the IDE system 602 can serve as a link between device vendors and a customer's plant ecosystem via a trusted connection in the cloud.

Copies of system project 702 can be propagated to multiple plant facilities having varying equipment configurations using smart propagation, whereby the project deployment component 608 intelligently associates project components with the correct industrial asset or control device even if the equipment on-site does not perfectly match the defined target (e.g., if different pump types are found at different sites). For target devices that do not perfectly match the expected asset, project deployment component 608 can calculate the estimated impact of running the system project 702 on non-optimal target equipment and generate warnings or recommendations for mitigating expected deviations from optimal project execution.

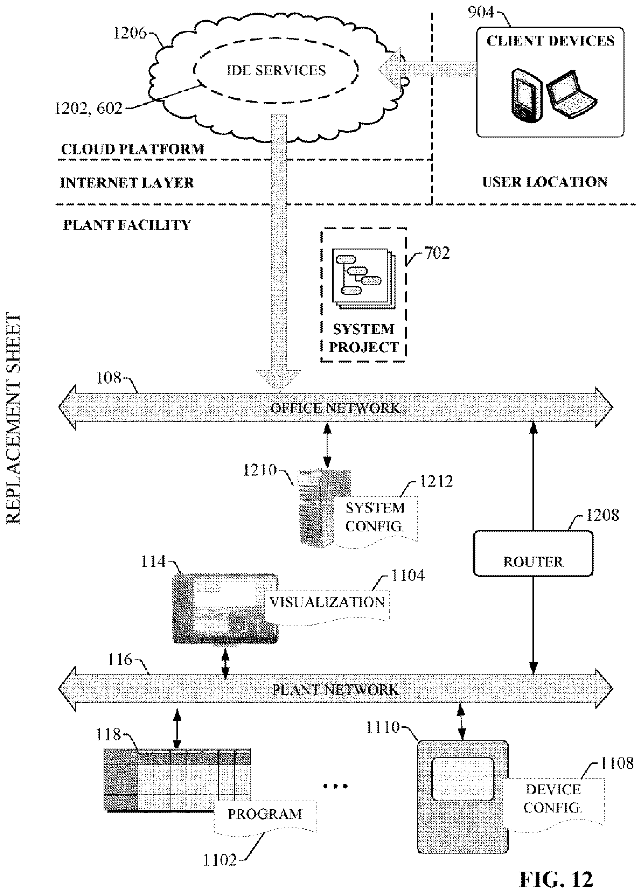

As noted above, some embodiments of IDE system 602 can be embodied on a cloud platform. FIG. 12 is a diagram illustrating an example architecture in which cloud-based IDE services 1202 arc used to develop and deploy industrial applications to a plant environment. In this example, the industrial environment includes one or more industrial controllers 118, HMI terminals 114, motor drives 1110, servers 1210 running higher level applications (e.g., ERP. MES, etc.), and other such industrial assets. These industrial assets are connected to a plant network 116 (e.g., a common industrial protocol network, an Ethernet/IP network, etc.) that facilitates data exchange between industrial devices on the plant floor. Plant network 116 may be a wired or a wireless network. In the illustrated example, the high-level servers 1210 reside on a separate office network 108 that is connected to the plant network 116 (e.g., through a router 1208 or other network infrastructure device).

In this example, IDE system 602 resides on a cloud platform 1206 and executes as a set of cloud-based IDE service 1202 that are accessible to authorized remote client devices 904. Cloud platform 1206 can be any infrastructure that allows shared computing services (such as IDE services 1202) to be accessed and utilized by cloud-capable devices. Cloud platform 1206 can be a public cloud accessible via the Internet by devices 904 having Internet connectivity and appropriate authorizations to utilize the IDE services 1202. In some scenarios, cloud platform 1206 can be provided by a cloud provider as a platform-as-a-service (PaaS), and the IDE services 1202 can reside and execute on the cloud platform 1206 as a cloud-based service. In some such configurations, access to the cloud platform 1206 and associated IDE services 1202 can be provided to customers as a subscription service by an owner of the IDE services 1202. Alternatively, cloud platform 1206 can be a private cloud operated internally by the industrial enterprise (the owner of the plant facility). An example private cloud platform can comprise a set of servers hosting the IDE services 1202 and residing on a corporate network protected by a firewall.

Cloud-based implementations of IDE system 602 can facilitate collaborative development by multiple remote developers who are authorized to access the IDE services 1202. When a system project 702 is ready for deployment, the project 702 can be commissioned to the plant facility via a secure connection between the office network 108 or the plant network 116 and the cloud platform 1206. As discussed above, the industrial IDE services 1202 can translate system project 702 to one or more appropriate executable files - control program files 702, visualization applications 704, device configuration files 708, system configuration files 1212 - and deploy these files to the appropriate devices in the plant facility to facilitate implementation of the automation project.

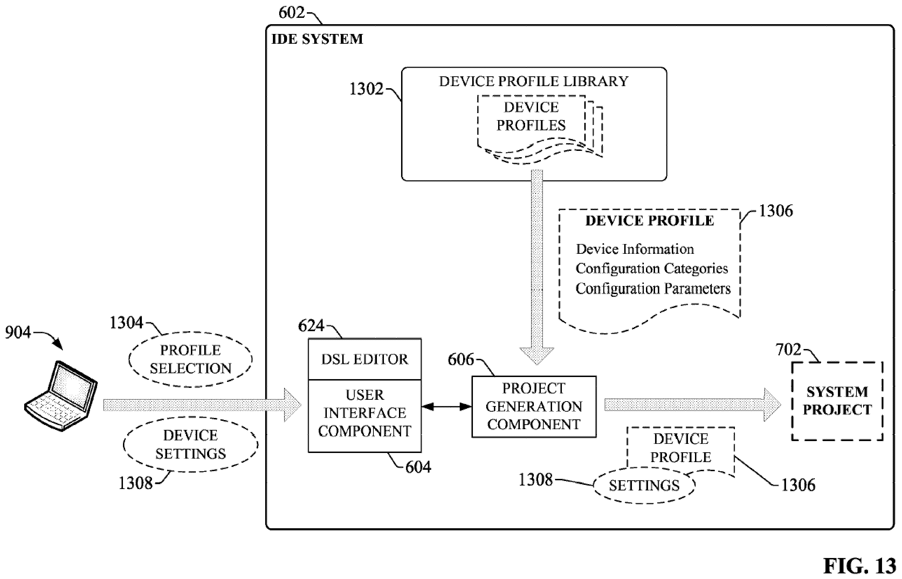

Some embodiments of the industrial IDE system 602 can support the use of device profiles to facilitate setting values of configurable device parameters for devices that are to be included in the automation project. FIG. 13 is a diagram illustrating configuration of device parameters using device profiles 1306. In general, each device profile 1306 corresponds to a device type, and is a re-usable object or file that defines a set of configurable device parameters - e.g., network or communication settings, scale factors, input or output signal types, operating mode settings, tuning parameter values, maximum or minimum values, refresh rates, channel configurations, etc. - for its corresponding device type. Each device profile 1306 can organize these device configuration parameters into categories to assist the user in locating a desired parameter. The device profile 1306 can also record general information about the device, some of which can be modified by the user to customize a generic device type to reflect a specific device (an instance of the device type).

The IDE system 602 can store device profiles 1306 for multiple types of devices in a device profile library 1302 for selective inclusion in system projects 702. Device profiles 1306 can be defined for a variety of different industrial devices or systems, including but not limited to industrial controller modules (e.g., analog or digital input and output modules, networking or scanner modules, special function modules, etc.), variable frequency drives, telemetry devices, safety relays, vision systems, or other such devices.

As illustrated in FIG. 13, during development of a system project 702, a user can interact with the IDE system's development interface to select a device profile 1306 to be added to the project 702. The selected profile 1306 typically corresponds to a type of device that will be included in the automation system for which the project 702 is being developed. Once a selected device profile 1306 has been added to the system project 702 (via submission of profile selection input 1304), the user can invoke device configuration interfaces defined by the device profile 1306 and interact with these configuration interfaces to set values of device parameters or settings 1308 for the device represented by the profile 1306. When the system project 702 is subsequently deployed to the industrial controller 118 or other devices that make up the automation system (as illustrated in FIGs. 11 and 12), the device configuration settings 1308 that had been submitted by the user are written to corresponding registers of the relevant field devices (e.g., the industrial controller 118 in the case of I/O modules or smart devices connected to the controller 118, or other target devices that are subject to the device settings).

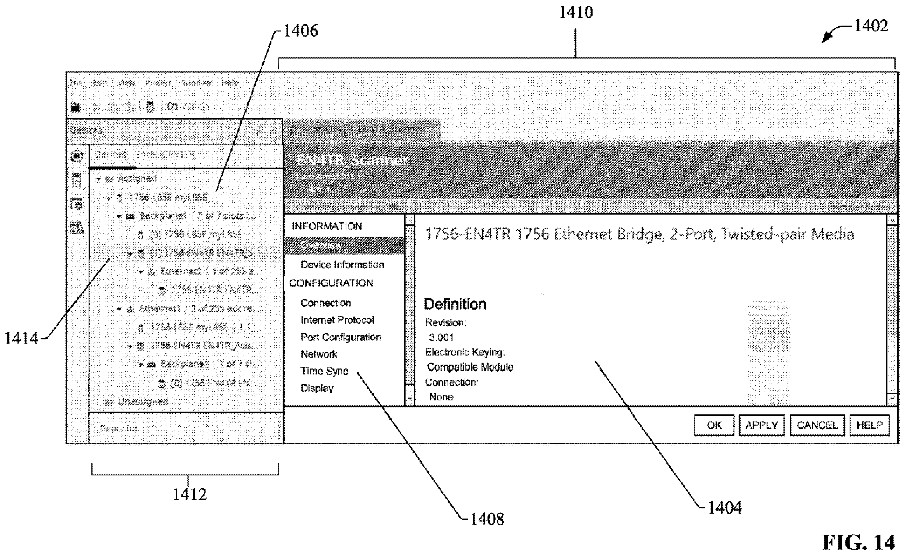

FIG. 14 is an example development interface 1402 that can be rendered on a client device by the industrial IDE system's user interface component 604. Development interface 1402 is organized into panels and workspaces for navigating and editing the system project 702. The example interface 1402 depicted in FIG. 14 comprises a main workspace area 1410 that serves as the IDE system's primary work area and an explorer panel 1412 located adjacent to the main workspace area 1410. The explorer panel 1412 displays a project tree 1406 comprising a hierarchical arrangement of selectable nodes representing elements of the system project 702 being developed. In general, selection of a project element from the project tree 1406 causes the main workspace area 1410 to render project content corresponding to the selected element, such as ladder logic or other types of control code, program routines, controller tag definitions, device configuration information, or other aspects of the project 702. The user can interact with these project elements within the main workspace area 1410 to perform such development functions as writing or editing controller code (e.g., ladder logic, function block diagrams, structured text, etc.), configuring device parameter settings, defining controller tags, or other such project development functions.

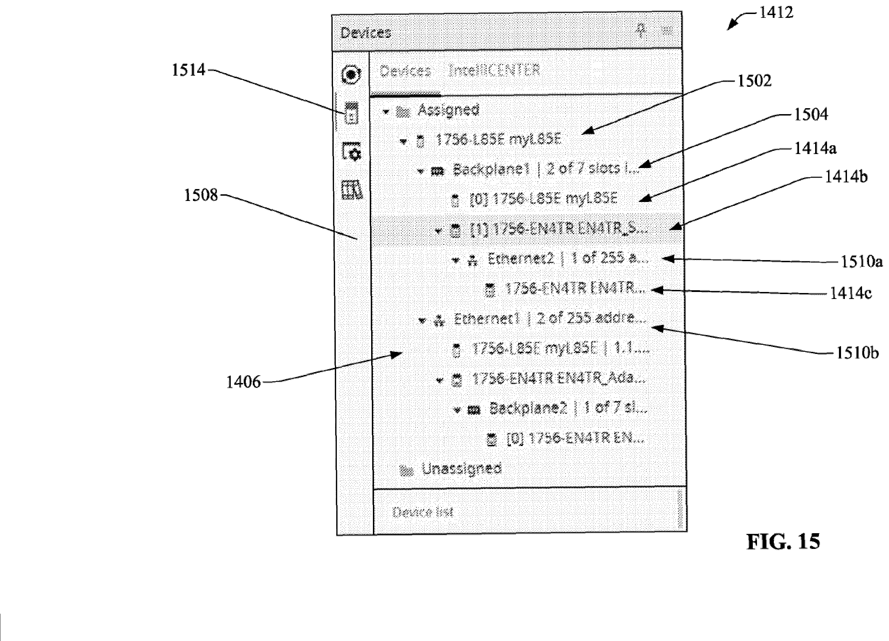

FIG. 15 is a view of the explorer panel 1412 and its associated project tree 1406 in isolation. As noted above, explorer panel 1412 serves as a means for navigating and viewing content of a system project 702 and supports various ways for performing this navigation. Selectable viewing categories are rendered as selectable explorer icons in a control bar 1508 pinned to the left-side edge of the explorer panel 1412. Selection of an explorer icon from the control bar 1508 sets the type of project content to be browsed via the Explorer panel 1412. In the scenario depicted in FIG. 15, a Devices view icon 1514 has been selected in the control bar 1508, causing the explorer panel 1412 to display, as the project tree 1406, a hierarchical arrangement of device nodes 1414 representing the devices defined for the system project 702.

For an example system project 702, the project tree 1406 can include a controller node 1502 representing an industrial controller 118 to be programmed as part of the system project 702. A backplane node 1504 is defined as a child node of the controller node 1502 and represents the backplane of the industrial controller 118 on which one or more devices or modules will be installed. Any modules or devices to be connected to the controller's backplane are represented as device nodes 1414 below the backplane node 1504. Example devices that can be associated with the controller can include, but are not limited to, digital or analog input modules, digital or analog output modules, networking or scanning modules, analytic modules, special function modules, smart industrial devices, motor drives such as variable frequency drives, or other such devices. Per the workflow illustrated in FIG. 13, a user can add a new device to the project by adding a new device node 1414 - representing a device profile 1306 for the type of the device - to the project tree 1406. Any suitable interaction can be used to add a new device to the project tree 1406. For example, the user may select the backplane node 1504 and invoke a device profile selection window (e.g., by right-clicking on the backplane node 1504) that displays a list of available types of devices that can be added to the project 702. Each device type has a corresponding device profile 1306 stored in the system's device profile library 1302. The device profile 1306 defines information about the corresponding device type, as well as any device parameters associated with the device type whose values can be set by the user.

The explorer icons rendered on the control bar 1508 can also include an Application icon that causes the explorer panel 1412 to display a list of applications - e.g., industrial control programs such as ladder logic routines - that make up the system project 702. This viewing mode allows the user to develop, view, and edit control programs within the main workspace area 1410. These control programs will be installed and executed on the industrial controller 118.

Returning to FIG. 14, selecting a device node 1414 in the project tree 1406 causes the main workspace area 1410 to display an interactive device configuration interface for viewing and editing configuration parameters for the selected device. Device information and configurable device parameters displayed on this device configuration interface are defined by the device profile 1306 for the selected device. In the example depicted in FIG. 14, the device configuration interface comprises a main configuration area 1404 and a category window 1408 that lists various informational and configuration categories for the device. Selecting a category from this window 1408 causes the main device configuration area 1404 to render information or configurable device parameters relating to the selected category.

Informational categories listed in the category window 1408 can include an Overview category and a more detailed Device Information category. Selection of the Overview category can cause summary information about the device - e.g., model number and revision number of the device, device type, a type of electronic keying, or other such information - to be rendered in the main workspace area 1410. In the example depicted in FIG. 14, the user has selected a device node 1414 representing an ethernet bridge module that will be installed on the controller's backplane, and has selected the Overview category within the category window 1408 so that general overview information for the module can be viewed.

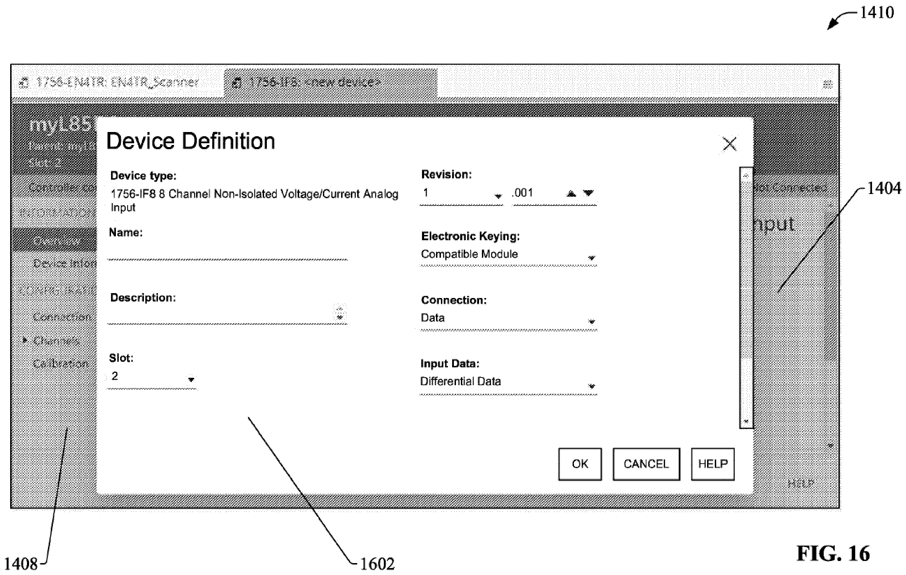

Depending on the type of device, some of the device information accessible via the Overview or Device Information categories can be edited by the user. FIG. 16 is a view of the main workspace area 1410 in which a Device Information editing window 1602 has been invoked for the selected device. This window 1602 includes data fields that allow the user to enter or edit various items of information about the device, including but not limited to a name of the device, a description of the device, a controller slot number in which the device is to be installed (if the device is a module to be installed on a controller backplane), revision information, a type of electronic keying, a type of connection, a type of input data, or other such information.

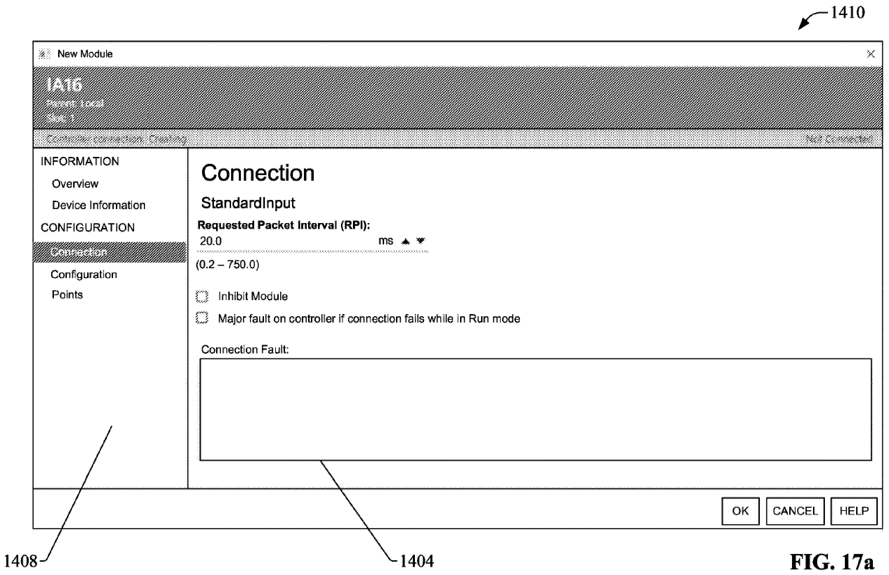

Returning again to FIG. 14, configuration categories listed in the category window 1408 can include, for example, a Connection category, an Internet Protocol category, a Port Configuration category, a Network category, a Time Sync category, a Display category, a Channels category, a Calibration category, an I/O points category, or other such configuration categories. The available configuration categories, as well as the specific parameters that are accessible under each category, can depend on the type of device being viewed. For example, FIG. 17a is a view of the main workspace area 1410 in which the user has selected a 16-point digital input module. Available configuration categories listed in the Category window 1408 for this type of device include a Connection category, a Configuration category, and a Points category. The Connection category has been selected in FIG. 17a, causing the configuration area 1404 to display configurable connection parameters for the module. These parameters include a packet interval timing, an indication as to whether the module is to be inhibited, and an indication as to whether a connection failure is to trigger a major fault on the controller 118. The configuration area renders interactive graphical controls - e.g., data entry boxes, drop down selection windows, binary check boxes, etc. - for each configurable parameter to allow the user to enter values of these parameters.

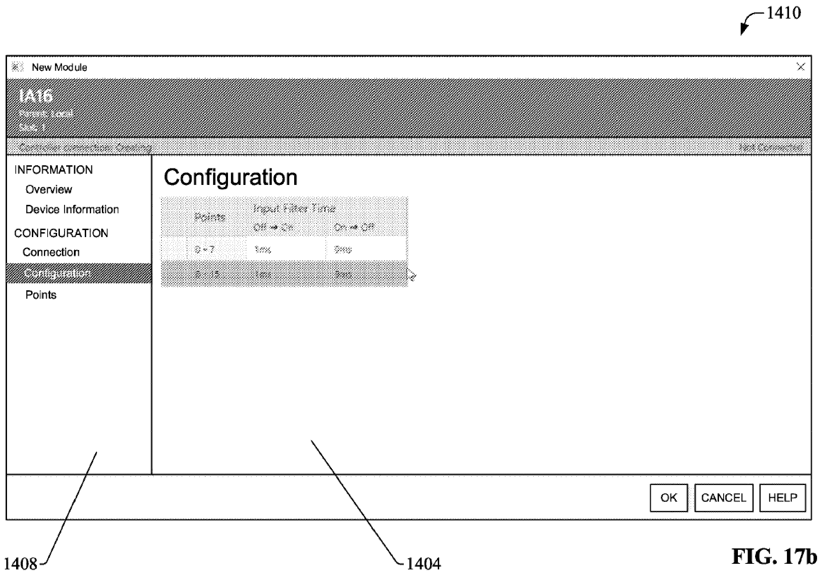

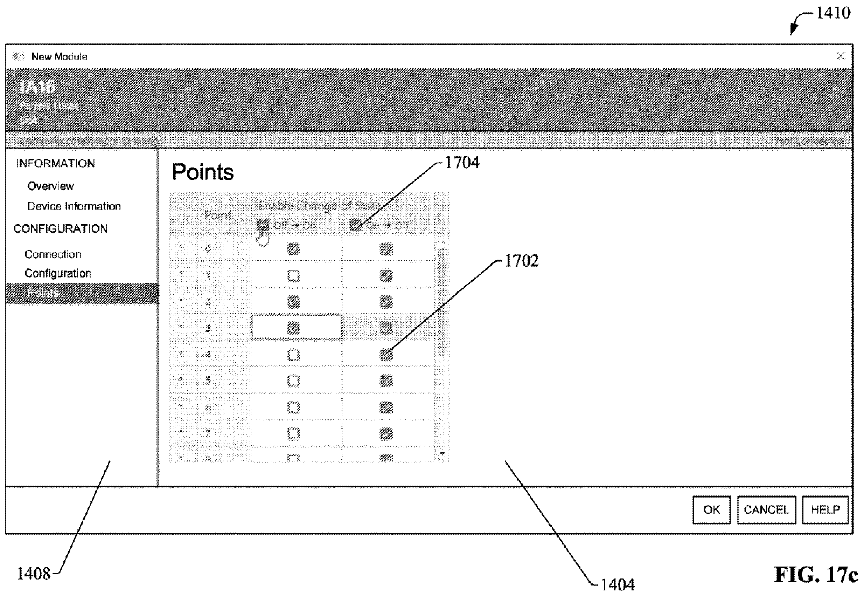

FIG. 17b is a view of the main workspace area 1410 in which the Configuration category has been selected in the Category window 1408. For the selected analog input module, selecting this category causes the configuration area 1404 to display an interactive table that allows the user to set input filter times for groups of input points. FIG. 17c is a view of the main workspace area 1410 in which the Points category has been selected in the Category window 1408. This invokes another interactive table in the configuration area 1404 that allows the user to selectively enable or disable changes of state - both on-to-off and off-to-on transitions - for each input point of the module. In contrast to generic table-based interfaces, this graphical configuration interface comprises both individual checkbox controls 1702 that allow the user to enable or disable state changes for individual input points, as well as global checkbox controls 1704 that allow the user to enable or disable state changes for all of the module's input points with a single selection input.

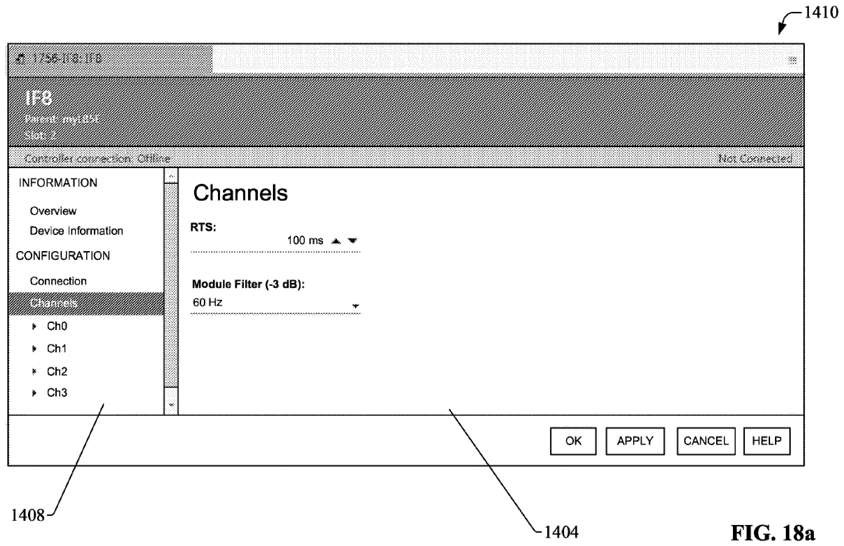

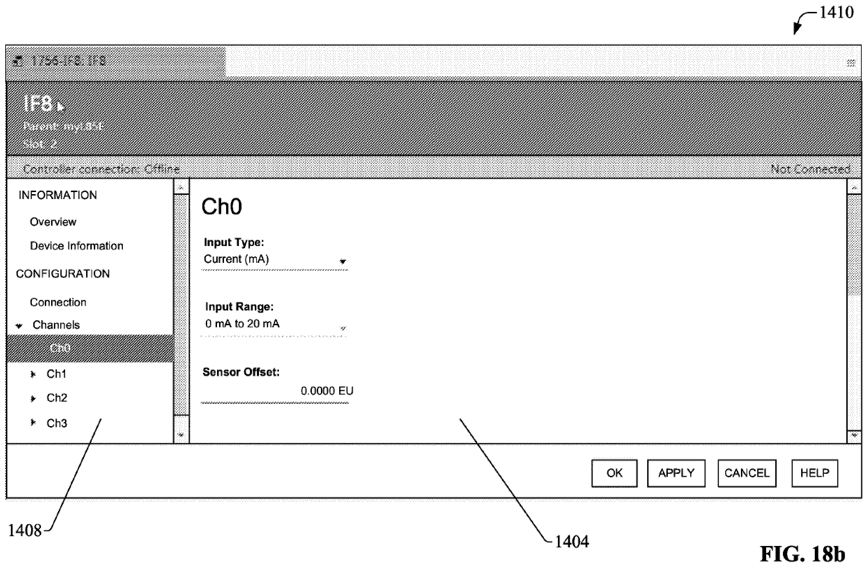

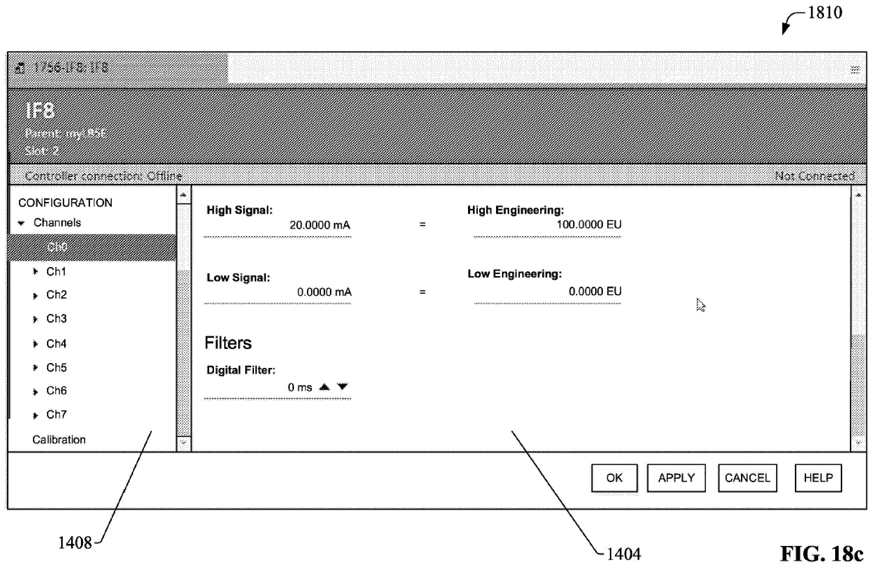

As noted above, the device profile 1306 for the device being configured defines the configuration parameters that will be presented for viewing and editing in the main workspace area. FIG. 18a is a view of the main workspace area 1410 in which another type of device - an 8-channel analog input module - has been selected. In this scenario, the configuration categories listed in the Category window 1408 include a Channels category for configuring the analog input channels of the module. General channel parameters that are applicable to all channels - including the real time sampling (RTS) period and the module filter frequency - are rendered in the configuration area 1404 and can be edited by the user. In addition, configuration parameters for each individual channel can be set within the configuration area 1404, as shown in FIGs. 18b and 18c. These channel-specific parameters can include, but are not limited to, a type of input signal provided to the channel (e.g., current or voltage), a range of the input signal (e.g., 4-20 milliamp, 0-10 volts, etc.), an offset value for the channel, high and low input signal limits, digital filter value, or other such configuration settings.

In some embodiments, the IDS system 602 can be configured to generate dynamic feedback in response to determining that the user has submitted a device configuration parameter value that is not within a valid range for the edited parameter. In this regard, some device profiles 1306 can define ranges of valid values for respective device parameters. As the user submits device configuration parameter values, the project generation component 606 can verify that each parameter value submitted by the user is within the valid ranges. If the user enters a parameter value that is outside that parameter's valid range, the user interface component 604 can render a notification on the development interface 1402 indicating that the value entered by the user is invalid. The project generation component 606 can reject any submitted parameter values that are outside their valid ranges.

The device configuration interfaces illustrated in FIGs. 14-18c and described above provide an intuitive interface for configuring industrial devices used in the system project 702. The device profile library 1302 can store device profiles 1306 for devices offered by multiple different device vendors, and the IDE system's interface allows these devices to be configured using a common device configuration workflow regardless of device vendor. The graphical device configuration interfaces generated by the IDE system 602 offer a more intuitive configuration workflow relative to more generic table-based device configuration interfaces. In some embodiments, the IDE system 602 can generate the device configuration interfaces using a web-based format, such as hypertext markup language (HTML), allowing the interfaces to be executed on a cloud platform or internet server and served to any type of device that supports web browsing. This format also allows the resulting device configuration interfaces to support a greater degree of customization relative to simple text-based device configuration profiles.

As discussed above in connection with FIGs. 13-15, users can add new devices to a system project by selectively adding device nodes 1414 - corresponding to selected device profiles 1306 - to the project tree 1406, which represents the project as a hierarchical topology of devices and busses that make up the project. Typically, to add a device to the project in this manner, the user assigns the device to a communication bus to which the device will be connected, and over which the device will communicate with other devices. These busses can include controller chassis backplanes, plant network busses (e.g., ethernet networks, fieldbus networks, etc.), remote or expansion I/O networks, or other such busses.

The project depicted in FIG. 15 includes multiple different busses, including a controller chassis backplane - represented by backplane node 1504 - corresponding to the backplane of the controller represented by controller node 1502. As shown in FIG. 15, this backplane node 1504 is defined as a child node of its corresponding controller node 1502. When the controller node 1502 for a selected controller is added to the project tree 1406, its associated backplane bus - represented by a backplane node 1504 - is also added to the project below the controller node 1502. Devices that are designed to connect to the controller's backplane, such as I/O or networking modules represented by device nodes 1414, can then be selectively added to the project tree 1406 under the backplane node 1504. as also shown in FIG. 15. For the IDE system 602 to support the controller type represented by controller node 1502, the controller's backplane must also be defined in the system 602 as a bus definition. This bus definition specifies the characteristics of the backplane, including but not limited to the number of devices or modules that can be added to the bus (which may correspond to the number of slots in the controller's chassis), the types of devices that can be added to the backplane (e.g., devices that correspond to the controller's product family or platform), a device addressing scheme for the backplane (addressing via slot number, addressing via a device address, etc.), or other such bus characteristics.

The example project depicted in FIG. 15 also includes a number of ethernet busses represented by bus nodes 1510a and 1510b. One of these ethernet busses - represented by bus node 1510a - is associated with a modular ethernet adapter installed on the controller's backplane, represented by device node 1414b. Adding device node 1414b to the controller's backplane adds both the device node 1414b for the selected ethernet adapter as a child of the backplane node 1504, as well as the bus node 1510a for an ethernet bus associated with the ethernet adapter. Ethernet-capable devices, such as the device represented by device node 1414c, can then be added to this ethernet bus. Also, since the selected controller has an integrated ethernet adapter, another ethernet bus - represented by bus node 1510b - is also added to the project when the controller node 1502 is added. Ethernet capable devices can then be added to this ethernet bus below its bus node 1510b. Similar to the backplane bus, characteristics of the ethernet bus must be predefined in the IDE system 602 so that system 602 can enforce rules regarding the types and number of devices that can be added to the bus, as well as the addressing scheme used to identify devices connected to the bus (e.g., ethernet IP addressing).

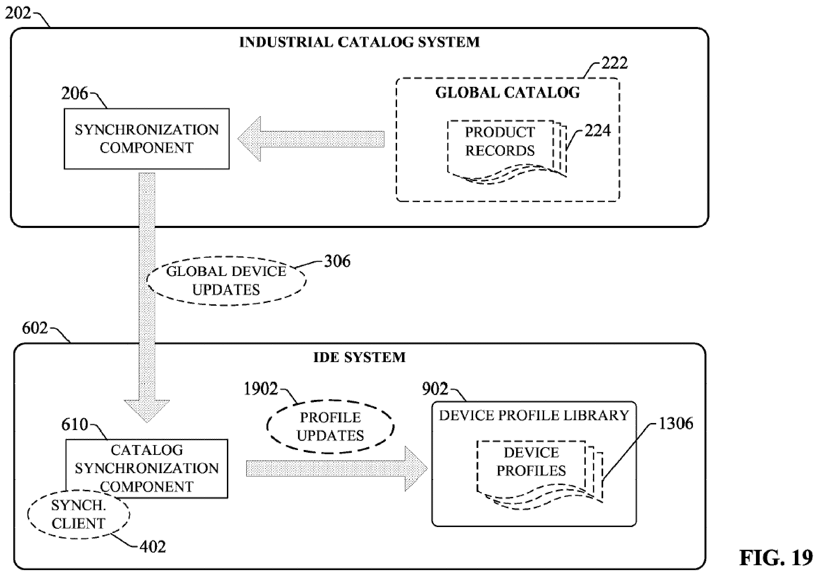

The industrial catalog system 202 described above in connection with FIGs. 2-5 can ensure that the set of device profiles 1306 available in the device profile library 902 accurately reflects the range of industrial devices currently offered by the device vendors whose products are represented in the library 902. FIG. 19 is a diagram illustrating synchronization of product records 224 to the device profile library 902 of an instance of the IDE system 602. The IDE system 602 can include a catalog synchronization component 610 configured to execute a synchronization client 402 that receives global device updates 306 from the catalog system's synchronization component 206, as described in previous examples. When a vendor whose products are represented in the device profile library 902 adds a new device to their offerings - e.g., a new industrial controller or module - or modifies the capabilities of an existing device, the synchronization component 206 can send an appropriate global device update 306 to instances of the IDE system 602. The global device update 306 contains information about the new device or the modified capability, which can be used by the IDE system's catalog synchronization component 610 to apply a corresponding profile update 1902 to the profile library 902. The profile update 1902 can create a new device profile 1306 in the library 902 representing a newly offered device, or modify an existing profile 1306 to reflect a change in the corresponding device's capabilities.

To allow for continued use of older versions of devices or legacy devices that may no longer be offered by a vendor, the profile updates 1902 may maintain device profiles 1306 for discontinued devices in the profile library 902 and flag those profiles 1306 as corresponding to devices that are no longer offered or supported. These flags can be reflected in on development interface 1402 in any suitable manner; e.g., by adding a note to the profile's main configuration area 1404.

The industrial catalog system 202 can synchronize instances of the device profile library 902 regardless of whether the host IDE system 602 resides on a client device (e.g., a laptop or desktop computer), a server residing at an industrial facility on an office or plant network, or on a cloud platform as a cloud-based service. Synchronization of the device profile library 902 in this manner does not require a new version of the IDE system's software including the updated profile library 902 to be installed on its host device or platform. Instead, the industrial catalog system 202 autonomously replicates product updates to customer-owned instances of the IDE system 202 so that new devices are available to developers for selective addition to control projects (e.g., by selectively adding the new profiles to their project trees 1406 as device nodes 1414).

Embodiments of the global catalog system described herein can ensure that updates to industrial product catalog information is autonomously and globally distributed to local systems and applications that reference local instances of the product catalog. Local applications that host local versions of the product catalog, such as industrial IDE systems, are automatically updated to reflect current product offerings without the need to install new versions of those applications equipped with current snapshots of the catalog.

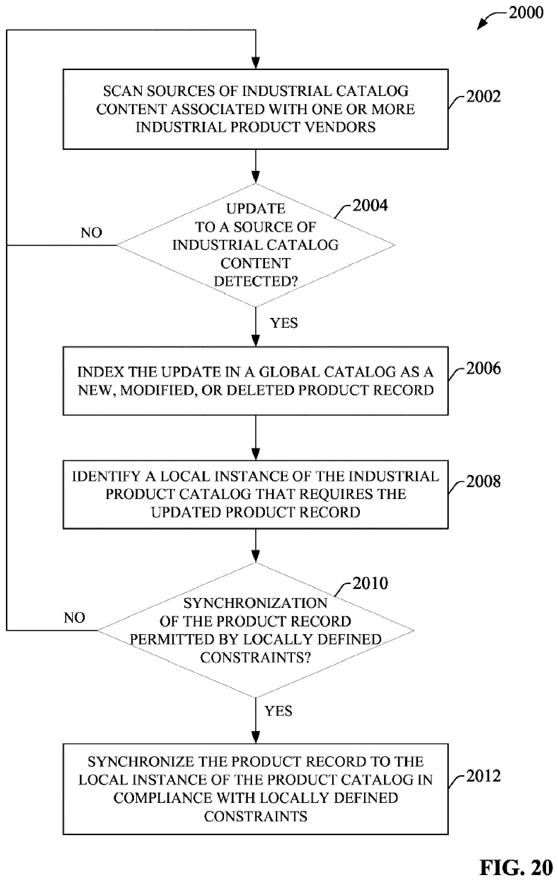

FIG. 20 illustrates an example methodology in accordance with one or more embodiments of the subject application. While, for purposes of simplicity of explanation, the methodology shown herein is shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 20 illustrates an example methodology 2000 for globally synchronizing industrial product catalog information to local instances of a product catalog. Initially, at 2002, sources of industrial catalog content associated with one or more industrial product vendors are scanned for modifications to the content of those sources. The sources of catalog content can comprise, for example, on-line vendor catalogs, on-premise servers residing at vendor facilities, or other such sources. The scanning can be performed by a cloud-based or web-based industrial catalog system that autonomously synchronizes industrial product catalog information to local instances of those product catalogs.

At 2004, a determination is made as to whether an update to a source of industrial catalog content is detected based on the scanning performed at step 2002. The update may be an addition of a new product, a modification to a product's specifications or attributes, or removal of a product from a vendor's catalog. If an update is detected (YES at step 2004), the methodology proceeds to step 2006, where the update is indexed in a global product catalog as a new, modified, or deleted product record.

At 2008, a local instance of the industrial product catalog that requires the updated product record is identified. The local instance can be hosted by any system, server, or application that maintains and accesses a local instance of the product catalog. At 2010, a determination is made as to whether synchronization of the product record is permitted by locally defined constraints. These local synchronization constraints can be defined by an administrator associated with the enterprise that owns the local instance of the catalog, and may specify types of industrial products that are not to be synchronized to the local instance (e.g., if those products are not used by the enterprise and therefore do not require synchronization). These constraints may also specify a limited subset of product attributes that are to be synchronized to the local instance of the catalog, so that other product attributes will not be synchronized.

If synchronization of the product record is not permitted by the local constraints (NO at step 2010), the methodology returns to step 2002 and scanning continues. Alternatively, if synchronization of the product record is permitted (YES at step 2010), the methodology proceeds to step 2012, where the product record is synchronized to the local instance of the product catalog in compliance with the locally defined constraints. Depending on the constraints defined by the local administrator, all attributes of the product record may be synchronized, or a limited subset of the product attributes specified by the constraints may be synchronized.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

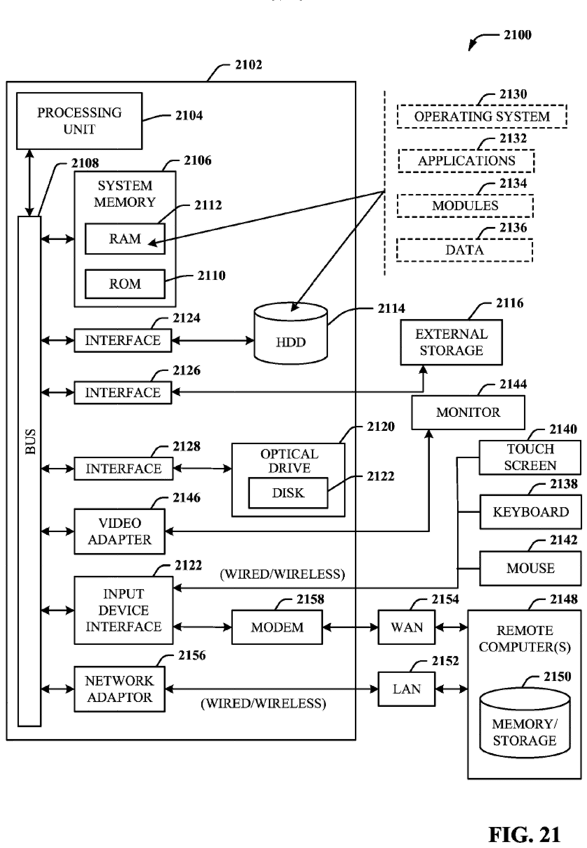

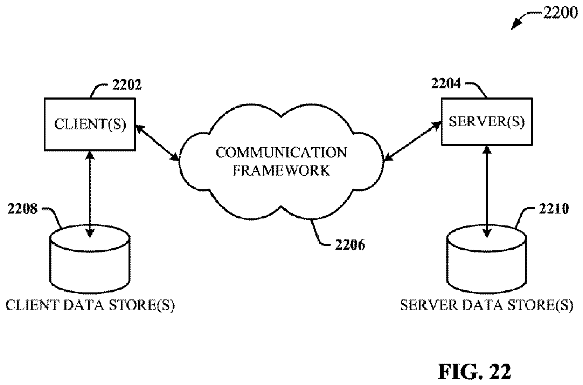

In order to provide a context for the various aspects of the disclosed subject matter, FIGs. 21 and 22 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 21, the example environment 2100 for implementing various embodiments of the aspects described herein includes a computer 2102, the computer 2102 including a processing unit 2104, a system memory 2106 and a system bus 2108. The system bus 2108 couples system components including, but not limited to, the system memory 2106 to the processing unit 2104. The processing unit 2104 can be any of various commercially available processors. Dual microprocessors and other multi-processor architectures can also be employed as the processing unit 2104.

The system bus 2108 can be any of several types of bus structure that can further interconnect to a memory bus (with or without a memory controller), a peripheral bus, and a local bus using any of a variety of commercially available bus architectures. The system memory 2106 includes ROM 2110 and RAM 2112. A basic input/output system (BIOS) can be stored in a non-volatile memory such as ROM, erasable programmable read only memory (EPROM), EEPROM, which BIOS contains the basic routines that help to transfer information between elements within the computer 2102, such as during startup. The RAM 2112 can also include a highspeed RAM such as static RAM for caching data.

The computer 2102 further includes an internal hard disk drive (HDD) 2114 (e.g., EIDE, SATA), one or more external storage devices 2116 (e.g., a magnetic floppy disk drive (FDD) 2116, a memory stick or flash drive reader, a memory card reader, etc.) and an optical disk drive 2120 (e.g., which can read or write from a CD-ROM disc, a DVD, a BD, etc.). While the internal HDD 2114 is illustrated as located within the computer 2102, the internal HDD 2114 can also be configured for external use in a suitable chassis (not shown). Additionally, while not shown in environment 2100, a solid state drive (SSD) could be used in addition to, or in place of, an HDD 2114. The HDD 2114, external storage device(s) 2116 and optical disk drive 2120 can be connected to the system bus 2108 by an HDD interface 2124, an external storage interface 2126 and an optical drive interface 2128, respectively. The interface 2124 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 2102, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 2112, including an operating system 2130, one or more application programs 2132, other program modules 2134 and program data 2136. All or portions of the operating system, applications, modules, and/or data can also be cached in the RAM 2112. The systems and methods described herein can be implemented utilizing various commercially available operating systems or combinations of operating systems.

Computer 2102 can optionally comprise emulation technologies. For example, a hypervisor (not shown) or other intermediary can emulate a hardware environment for operating system 2130, and the emulated hardware can optionally be different from the hardware illustrated in FIG. 21. In such an embodiment, operating system 2130 can comprise one virtual machine (VM) of multiple VMs hosted at computer 2102. Furthermore, operating system 2130 can provide runtime environments, such as the Java runtime environment or the .NET framework, for application programs 2132. Runtime environments are consistent execution environments that allow application programs 2132 to run on any operating system that includes the runtime environment. Similarly, operating system 2130 can support containers, and application programs 2132 can be in the form of containers, which are lightweight, standalone, executable packages of software that include, e.g., code, runtime, system tools, system libraries and settings for an application.

Further, computer 2102 can be enable with a security module, such as a trusted processing module (TPM). For instance with a TPM, boot components hash next in time boot components, and wait for a match of results to secured values, before loading a next boot component. This process can take place at any layer in the code execution stack of computer 2102. e.g., applied at the application execution level or at the operating system (OS) kernel level, thereby enabling security at any level of code execution.

A user can enter commands and information into the computer 2102 through one or more wired/wireless input devices, e.g., a keyboard 2138, a touch screen 2140, and a pointing device, such as a mouse 2142. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 2104 through an input device interface 2144 that can be coupled to the system bus 2108, but can be connected by other interfaces, such as a parallel port, an IEEE 1394 serial port, a game port, a USB port, an IR interface, a BLUETOOTH^{®} interface, etc.

A monitor 2144 or other type of display device can be also connected to the system bus 2108 via an interface, such as a video adapter 2146. In addition to the monitor 2144, a computer typically includes other peripheral output devices (not shown), such as speakers, printers, etc.

The computer 2102 can operate in a networked environment using logical connections via wired and/or wireless communications to one or more remote computers, such as a remote computer(s) 2148. The remote computer(s) 2148 can be a workstation, a server computer, a router, a personal computer, portable computer, microprocessor-based entertainment appliance, a peer device or other common network node, and typically includes many or all of the elements described relative to the computer 2102, although, for purposes of brevity, only a memory/storage device 2150 is illustrated. The logical connections depicted include wired/wireless connectivity to a local area network (LAN) 2152 and/or larger networks, e.g., a wide area network (WAN) 2154. Such LAN and WAN networking environments are commonplace in offices and companies, and facilitate enterprise-wide computer networks, such as intranets, all of which can connect to a global communications network, e.g., the Internet.

When used in a LAN networking environment, the computer 2102 can be connected to the local network 2152 through a wired and/or wireless communication network interface or adapter 2156. The adapter 2156 can facilitate wired or wireless communication to the LAN 2152. which can also include a wireless access point (AP) disposed thereon for communicating with the adapter 2156 in a wireless mode.

When used in a WAN networking environment, the computer 2102 can include a modem 2158 or can be connected to a communications server on the WAN 2154 via other means for establishing communications over the WAN 2154, such as by way of the Internet. The modem 2158, which can be internal or external and a wired or wireless device, can be connected to the system bus 2108 via the input device interface 2122. In a networked environment, program modules depicted relative to the computer 2102 or portions thereof, can be stored in the remote memory/storage device 2150. It will be appreciated that the network connections shown are example and other means of establishing a communications link between the computers can be used.

When used in either a LAN or WAN networking environment, the computer 2102 can access cloud storage systems or other network-based storage systems in addition to, or in place of, external storage devices 2116 as described above. Generally, a connection between the computer 2102 and a cloud storage system can be established over a LAN 2152 or WAN 2154 e.g., by the adapter 2156 or modem 2158, respectively. Upon connecting the computer 2102 to an associated cloud storage system, the external storage interface 2126 can, with the aid of the adapter 2156 and/or modem 2158, manage storage provided by the cloud storage system as it would other types of external storage. For instance, the external storage interface 2126 can be configured to provide access to cloud storage sources as if those sources were physically connected to the computer 2102.

The computer 2102 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 22 is a schematic block diagram of a sample computing environment 2200 with which the disclosed subject matter can interact. The sample computing environment 2200 includes one or more client(s) 2202. The client(s) 2202 can be hardware and/or software (e.g., threads, processes, computing devices). The sample computing environment 2200 also includes one or more server(s) 2204. The server(s) 2204 can also be hardware and/or software (e.g., threads, processes, computing devices). The servers 2204 can house threads to perform transformations by employing one or more embodiments as described herein, for example. One possible communication between a client 2202 and servers 2204 can be in the form of a data packet adapted to be transmitted between two or more computer processes. The sample computing environment 2200 includes a communication framework 2206 that can be employed to facilitate communications between the client(s) 2202 and the server(s) 2204. The client(s) 2202 are operably connected to one or more client data store(s) 2208 that can be employed to store information local to the client(s) 2202. Similarly, the server(s) 3504 are operably connected to one or more server data store(s) 2210 that can be employed to store information local to the servers 2204.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

**The following is a list of further embodiments of the invention:**
Embodiment 1. A system for synchronizing industrial catalog information, comprising:
   a memory that stores executable components; and
   a processor, operatively coupled to the memory, that executes the executable components, the executable components comprising:
      an indexing component configured to monitor a source of industrial product catalog information and, in response to detecting a change to the industrial product catalog information relating to an industrial product, index the change as a product record in a global catalog stored on a cloud platform, wherein the product record contains information about the industrial product; and
      a synchronization component configured to, in response to determining that the product record has been added or modified, identify an application or a client device that hosts a local version of the industrial product catalog information, synchronize the product record to the local version of the industrial catalog product information.
Embodiment 2. The system of embodiment 1, wherein the industrial product catalog information comprises at least one of industrial product information stored on an on-line vendor catalog, electronic data sheet files for industrial devices, industrial device profiles, device type modules, electronic document delivery files, spreadsheet files, word processing documents, or portable document file documents.
Embodiment 3. The system of embodiment 1, wherein the industrial product is an industrial device or an industrial software application.
Embodiment 4. The system of embodiment 1, wherein the change to the industrial product catalog information is one of an addition of a new industrial product, a removal of a discontinued industrial product, or a modification to the specification information for an industrial product.
Embodiment 5. The system of embodiment 1, wherein the information about the industrial product contained in the product record is at least one of a device type, an application type, a product name, a model number, physical dimensions, technical specifications, power consumption, available data ports, types and numbers of available inputs and outputs, storage capacity, processing capacity, a current firmware version, a supported network, or a supported communication protocol.
Embodiment 6. The system of embodiment 1, wherein the indexing component is configured to monitor multiple sources of industrial product catalog information corresponding to different industrial product vendors, and to index changes to the multiple sources of industrial product information in the global catalog segregated according to the industrial product vendors.
Embodiment 7. The system of embodiment 1, wherein the indexing component is configured to, in response to identifying two or more sources of industrial product catalog information for a same industrial product, aggregate information from the two or more sources into a same product record for the industrial product.
Embodiment 8. The system of embodiment 1, wherein the synchronization component is configured to synchronize the product record to the local version of the industrial catalog product information in accordance with a synchronization policy defined for the local version of the industrial product catalog information.
Embodiment 9. The system of embodiment 8, wherein the synchronization policy defines at least one of types of industrial products permitted to be synchronized to the local version of the industrial product catalog information or a subset of available product attributes permitted to be synchronized to the local version of the industrial product catalog information.
Embodiment 10. The system of embodiment 1, wherein the local version of the industrial product catalog information is a device profile library hosted on an industrial integrated development environment (IDE) system.
Embodiment 11. A method, comprising:
   monitoring, by a system comprising a processor, a source of industrial product catalog information;
   in response to detecting, based on the monitoring, a change to the industrial product catalog information relating to an industrial product, indexing, by the system, the change as a product record in a global catalog stored on a cloud platform, wherein the product record contains information about the industrial product; and
   in response to determining that the product record has been added or modified:
      identifying, by the system, an application or a client device that hosts a local version of the industrial product catalog information; and
      synchronizing, by the system, the product record to the local version of the industrial catalog product information.
Embodiment 12. The method of embodiment 11, wherein the industrial product catalog information comprises at least one of industrial product information stored on an on-line vendor catalog, electronic data sheet files for industrial devices, industrial device profiles, device type modules, electronic document delivery files, spreadsheet files, word processing documents, or portable document file documents.
Embodiment 13. The method of embodiment 11, wherein the industrial product is an industrial device or an industrial software application.
Embodiment 14. The method of embodiment 11, wherein the detecting comprises detecting one of an addition of a new industrial product, a removal of a discontinued industrial product, or a modification to the specification information for an industrial product.
Embodiment 15. The method of embodiment 11, wherein the information about the industrial product contained in the product record is at least one of a device type, an application type, a product name, a model number, physical dimensions, technical specifications, power consumption, available data ports, types and numbers of available inputs and outputs, storage capacity, processing capacity, a current firmware version, a supported network, or a supported communication protocol.
Embodiment 16. The method of embodiment 11, wherein
   the monitoring comprises monitoring multiple sources of industrial product catalog information corresponding to different industrial product vendors, and
   the indexing comprises indexing changes to the multiple sources of industrial product information in the global catalog segregated according to the industrial product vendors.
Embodiment 17. The method of embodiment 11, wherein the indexing comprises, in response to identifying two or more sources of industrial product catalog information for a same industrial product, aggregating information from the two or more sources into a same product record for the industrial product.
Embodiment 18. The method of embodiment 11, wherein the synchronizing comprises synchronizing the product record to the local version of the industrial catalog product information in accordance with a synchronization policy defined for the local version of the industrial product catalog information.
Embodiment 19. A non-transitory computer-readable medium having stored thereon instructions that, in response to execution, cause a system comprising a processor to perform operations, the operations comprising:
   monitoring a source of industrial product catalog information;
   in response to detecting, based on the monitoring, a change to the industrial product catalog information relating to an industrial product, indexing the change as a product record in a global catalog stored on a cloud platform, wherein the product record contains information about the industrial product; and
   in response to determining that the product record has been added or modified:
      identifying an application or a client device that hosts a local version of the industrial product catalog information; and
      synchronizing, by the system, the product record to the local version of the industrial catalog product information.
Embodiment 20. The non-transitory computer-readable medium of embodiment 19, wherein the industrial product catalog information comprises at least one of industrial product information stored on an on-line vendor catalog, electronic data sheet files for industrial devices, industrial device profiles, device type modules, electronic document delivery files, spreadsheet files, or word processing documents.

## Claims

1. A system for synchronizing industrial catalog information, comprising:
a memory that stores executable components; and
a processor, operatively coupled to the memory, that executes the executable components, the executable components comprising:
an indexing component configured to monitor a source of industrial product catalog information and, in response to detecting a change to the industrial product catalog information relating to an industrial product, index the change as a product record in a global catalog stored on a cloud platform, wherein the product record contains information about the industrial product; and
a synchronization component configured to, in response to determining that the product record has been added or modified, identify an application or a client device that hosts a local version of the industrial product catalog information, synchronize the product record to the local version of the industrial catalog product information.

2. The system of claim 1, wherein the industrial product catalog information comprises at least one of industrial product information stored on an on-line vendor catalog, electronic data sheet files for industrial devices, industrial device profiles, device type modules, electronic document delivery files, spreadsheet files, word processing documents, or portable document file documents.

3. The system of claim 1 or 2, wherein the industrial product is an industrial device or an industrial software application.

4. The system of one of claims 1 to 3, wherein the change to the industrial product catalog information is one of an addition of a new industrial product, a removal of a discontinued industrial product, or a modification to the specification information for an industrial product.

5. The system of one of claims 1 to 4, wherein the information about the industrial product contained in the product record is at least one of a device type, an application type, a product name, a model number, physical dimensions, technical specifications, power consumption, available data ports, types and numbers of available inputs and outputs, storage capacity, processing capacity, a current firmware version, a supported network, or a supported communication protocol.

6. The system of one of claims 1 to 5, wherein the indexing component is configured to monitor multiple sources of industrial product catalog information corresponding to different industrial product vendors, and to index changes to the multiple sources of industrial product information in the global catalog segregated according to the industrial product vendors; or
wherein the indexing component is configured to, in response to identifying two or more sources of industrial product catalog information for a same industrial product, aggregate information from the two or more sources into a same product record for the industrial product.

7. The system of one of claims 1 to 6, wherein the synchronization component is configured to synchronize the product record to the local version of the industrial catalog product information in accordance with a synchronization policy defined for the local version of the industrial product catalog information; and/or
wherein the synchronization policy defines at least one of types of industrial products permitted to be synchronized to the local version of the industrial product catalog information or a subset of available product attributes permitted to be synchronized to the local version of the industrial product catalog information.

8. The system of one of claims 1 to 7, wherein the local version of the industrial product catalog information is a device profile library hosted on an industrial integrated development environment (IDE) system.

9. A method, comprising:
monitoring, by a system comprising a processor, a source of industrial product catalog information;
in response to detecting, based on the monitoring, a change to the industrial product catalog information relating to an industrial product, indexing, by the system, the change as a product record in a global catalog stored on a cloud platform, wherein the product record contains information about the industrial product; and
in response to determining that the product record has been added or modified:
identifying, by the system, an application or a client device that hosts a local version of the industrial product catalog information; and
synchronizing, by the system, the product record to the local version of the industrial catalog product information.

10. The method of claim 9, wherein the industrial product catalog information comprises at least one of industrial product information stored on an on-line vendor catalog, electronic data sheet files for industrial devices, industrial device profiles, device type modules, electronic document delivery files, spreadsheet files, word processing documents, or portable document file documents; or
wherein the industrial product is an industrial device or an industrial software application, or
wherein the detecting comprises detecting one of an addition of a new industrial product, a removal of a discontinued industrial product, or a modification to the specification information for an industrial product; or
wherein the information about the industrial product contained in the product record is at least one of a device type, an application type, a product name, a model number, physical dimensions, technical specifications, power consumption, available data ports, types and numbers of available inputs and outputs, storage capacity, processing capacity, a current firmware version, a supported network, or a supported communication protocol.

11. The method of one of claims 9 to 10, wherein
the monitoring comprises monitoring multiple sources of industrial product catalog information corresponding to different industrial product vendors, and
the indexing comprises indexing changes to the multiple sources of industrial product information in the global catalog segregated according to the industrial product vendors.

12. The method of one of claims 9 to 11, wherein the indexing comprises, in response to identifying two or more sources of industrial product catalog information for a same industrial product, aggregating information from the two or more sources into a same product record for the industrial product.

13. The method of one of claims 9 to 12, wherein the synchronizing comprises synchronizing the product record to the local version of the industrial catalog product information in accordance with a synchronization policy defined for the local version of the industrial product catalog information.

14. A non-transitory computer-readable medium having stored thereon instructions that, in response to execution, cause a system comprising a processor to perform operations, the operations comprising:
monitoring a source of industrial product catalog information;
in response to detecting, based on the monitoring, a change to the industrial product catalog information relating to an industrial product, indexing the change as a product record in a global catalog stored on a cloud platform, wherein the product record contains information about the industrial product; and
in response to determining that the product record has been added or modified:
identifying an application or a client device that hosts a local version of the industrial product catalog information; and
synchronizing, by the system, the product record to the local version of the industrial catalog product information.

15. The non-transitory computer-readable medium of claim 14, wherein the industrial product catalog information comprises at least one of industrial product information stored on an on-line vendor catalog, electronic data sheet files for industrial devices, industrial device profiles, device type modules, electronic document delivery files, spreadsheet files, or word processing documents.
